# EUROPÄISCHE PATENTANMELDUNG

(11) **EP 1 584 230 A1**
(43) Veröffentlichungstag der Anmeldung: **12.10.2005**
(21) Anmeldenummer: 05007400.4
(22) Anmeldetag: 05.04.2005
(51) Int. Cl.: A01K 1/01

(54) **Reinigungseinrichtung zum Reinigen von Liegeboxen, Verfahren zur Reinigung von Liegeboxen und die Reinigungseinrichtung umfassender Stall**

(30) Priorität: 05.04.2004 DE 102004016720; 05.04.2004 DE 102004016721
(71) Anmelder: Hartmann GmbH, 92265 Edelsfeld (DE)
(72) Erfinder: Hartmann, Hans, 92265 Edelsfeld (DE)
(74) Vertreter: Hartz, Nikolai

(57) **Zusammenfassung**

Reinigungseinrichtung zum Reinigen von nebeneinander angeordneten und an einen Laufgang (30,130,230,330,430) angrenzenden Liegeboxen (12,112,212,312,412) für Kühe, wobei die Reinigungseinrichtung an den nebeneinander angeordneten Liegeboxen vorbei bewegbar ist und mindestens eine die Liegeflächen (13) der Liegeboxen reinigende Bürste (87) umfasst.

## Beschreibung

Die vorliegende Erfindung betrifft eine Reinigungseinrichtung zum Reinigen von nebeneinander angeordneten und an einen Laufgang angrenzenden Liegeboxen, ein Verfahren zur Reinigung von nebeneinander angeordneten und an einen Laufgang angrenzenden Liegeboxen und einen die Reinigungseinrichtung umfassenden Stall. Die Erfindung betrifft ferner ein Verfahren zum Melken von Kühen, eine Treib- und Absperrvorrichtung die dabei verwendet wird und einen Stall, in dem das erfindungsgemäße Verfahren mit der erfindungsgemäßen Treib- und Absperrvorrichtung durchgeführt werden kann.

### Stand der Technik

Bei einer Tierhaltung zur Milchproduktion nehmen die Tiere üblicherweise in einem Fressbereich Futter und Wasser zu sich oder ruhen, überwiegend unter Wiederkäuen, in einem Liegebereich. Dabei müssen die Tiere gemolken und ihr Stall gereinigt werden. Das Melken der Tiere, insbesondere bei Kühen, und das Reinigen des Stalls, insbesondere des Liegebereichs beansprucht herkömmlicherweise einen sehr großen Zeit- und Arbeitsaufwand. Zur Reduzierung der Arbeitszeit und des Arbeitsaufwands beim Melken wurden in den letzten Jahren Melkroboter eingesetzt. Ein Melkroboter ist ein automatisches Melksystem. Er wird in einem Freilaufstall so aufgebaut, dass sich die Tiere davon selbst melken lassen können. Dieser Einsatz eines Melkroboters bringt jedoch folgende Nachteile mit sich. Manche Tiere wollen sich nicht freiwillig in regelmäßigen Abständen von dem Melkroboter melken lassen, so dass ihre und damit die gesamte Milchproduktion nicht gesteigert oder optimiert werden kann. In anderen Fällen wollen manche Tiere überhaupt nicht von einem Melkroboter gemolken werden, so dass sie schließlich keine Milch mehr produzieren. Daher müssen die Tiere beim Einsatz eines herkömmlichen Melkroboters genau überwacht und gegebenenfalls einzeln zum Melkroboter getrieben werden. Daher konnte der Einsatz von Melkrobotern den Arbeits- und Zeitaufwand für das Betriebspersonal beim Melken nicht wesentlich senken. Darüber hinaus ging die durchschnittliche Milchproduktion einer Herde pro Tier sogar zurück, da die Überwachung insbesondere bei großen Herden bzw. Ställen nicht lückenlos erfolgen kann und so einige Tiere nicht oft genug oder gar nicht gemolken werden. Außerdem ist eine systematische Reinigung der einzelnen Liegeboxen in dem Liegebereich der Tiere nicht zu bewerkstelligen, wenn die Tiere unsystematisch nach der oben beschriebenen Art und Weise von einem Melkroboter gemolken werden. Der Arbeits- und Zeitaufwand für eine Reinigung des Liegebereichs wurde sogar erhöht. Weiterhin ist eine Reinigung des Liegebereichs nicht auf eine Art und Weise möglich, bei der alle Kühe in ihren Ruhephasen und vor allem beim Wiederkäuen, das für die Milchproduktion eine bedeutende Rolle spielt, nicht gestört werden.

Es ist daher eine Aufgabe der vorliegenden Erfindung die Nachteile gemäß dem Stand der Technik zu beseitigen. Insbesondere soll eine Reinigungseinrichtung, ein Stall und ein Verfahren zum Reinigen von Liegeboxen bereitgestellt werden, wodurch nicht nur die hygienischen Verhältnisse in dem Stall verbessert werden, sondern gleichzeitig auch die Produktivität der Tiere und damit die Milchproduktion gesteigert und der Arbeits- und Zeitaufwand für das Personal bei der Milchproduktion verringert wird. Außerdem soll ein Verfahren zum Melken von Kühen bereitgestellt werden, das nicht nur den Arbeits- und Zeitaufwand für das Personal verringert, sondern gleichzeitig auch die Produktivität der Tiere und damit die Milchproduktion steigert.

### Offenbarung der Erfindung

Die oben genannte Aufgabe wird durch eine Reinigungseinrichtung zum Reinigen von nebeneinander angeordneten und an einen Laufgang angrenzenden Liegeboxen für Kühe gelöst, wobei die Reinigungseinrichtung an den nebeneinander angeordneten Liegeboxen vorbei bewegbar ist und mindestens eine die Liegeflächen der Liegeboxen reinigende Bürste umfasst.

Diese Erfindung ermöglicht eine gründliche Reinigung durch die der Liegebereich der Kühe und der Laufgang systematisch gereinigt werden können. Daher werden erfindungsgemäß nicht nur die hygienischen Verhältnisse in einem Stall verbessert, sondern gleichzeitig kann auch die Produktivität der Tiere und damit die Milchproduktion gesteigert und der Arbeits-und Zeitaufwand für das Personal bei der Milchproduktion verringert werden. Denn die systematische Reinigung wird in sehr kurzer Zeit und auf sehr effektive Art und Weise durchgeführt.

Vorzugsweise ist die Bürste rotierbar. Dabei kann ihre Rotationsachse gegenüber der Vertikalen zur Liegefläche der Liegebox geneigt sein, und die nebeneinander angeordneten Liegeboxen können kontinuierlich durch die an den Liegeboxen vorbei bewegbare Reinigungseinrichtung gereinigt werden. Bei einer weiteren Ausführungsform der Erfindung ist die Bürste rotierbar, wobei ihre Rotationsachse im Wesentlichen parallel zu dem Laufgang verläuft, an den die Liegeboxen angrenzen. Auch diese Ausführungsform erlaubt eine kontinuierliche Reinigung der nebeneinanderliegenden Liegeboxen. Die kontinuierliche Reinigung ist besonders vorteilhaft in sehr kurzer Zeit, systematisch und gründlich durchführbar.

Ferner kann die Bürste bei der vorliegenden Erfindung gemäß einer bevorzugten Ausführungsform in jeder Liegebox in der Richtung von dem Kopfende der Liegebox zu dem Ende der Liegebox, das dem Laufgang zugewandt ist, bewegbar sein. Dadurch kann die Gründlichkeit der Reinigung vorteilhaft weiter erhöht werden.

Gemäß einer weiteren bevorzugten Ausführungsform der Erfindung ist die Reinigungseinrichtung an einer Viehtreibereinrichtung angeordnet, die von einem ersten Ende des Laufgangs zu einem zweiten Ende des Laufgangs, an dem der Laufgang in einen zweiten Laufgang mündet, vor- und wieder zurückbewegbar ist.

Außerdem kann die Reinigungseinrichtung an einem Mistschieber befestigt sein, der in dem Laufgang vor- und zurückbewegbar ist.

Gemäß einem weiteren Gesichtspunkt der vorliegenden Erfindung wird ein Verfahren zur Reinigung von nebeneinander angeordneten und an einen Laufgang angrenzenden Liegeboxen für Kühe bereitgestellt, wobei die oben beschriebene Reinigungseinrichtung an den nebeneinander angeordneten Liegeboxen vorbei bewegt wird.

Vorzugsweise erfolgt das Reinigen der Liegeboxen in dem Drittel der einzelnen Liegeboxen, das dem Laufgang zugewandt ist.

Ferner kann nach dem Reinigen der Liegeboxen frische Einstreu, die vorzugsweise Strohhäcksel oder Sägemehl umfasst, auf die einzelnen Liegeboxen aufgebracht werden, vorzugsweise auf das Drittel der einzelnen Liegeboxen, das dem Laufgang zugewandt ist.

Bei einer besonders bevorzugten Ausführungsform der Erfindung umfasst das Reinigungsverfahren der vorliegenden Erfindung ein Melken von Kühen nach den folgenden Schritten:
(a) ein Zusammentreiben mindestens einer ersten Gruppe von Kühen, die sich in einem der ersten Gruppe zugeordneten Liege- und Fressbereich eines Stalls aufhalten, wobei der Liegebereich die Liegeboxen umfasst, über einen ersten Laufgang, der zwischen dem Liege- und Fressbereich angeordnet ist, auf einen zweiten Laufgang, durch eine Viehtreibereinrichtung, die von einem ersten Ende des ersten Laufgangs zu einem zweiten Ende des ersten Laufgangs bewegt wird, an dem der erste Laufgang in den zweiten Laufgang mündet,
(b) ein Hineintreiben der Gruppe von Kühen von dem zweiten Laufgang, gegebenenfalls über einen Vorwartehof, in einen Melkraum, in dem die Kühe gemolken werden;
(c) das Reinigen der Liegeboxen des der ersten Gruppe zugeordneten Liegebereichs gemäß einem der vorstehenden Verfahren, und
(d) ein Zurücktreiben der gemolkenen Kühe in den der ersten Gruppe zugeordneten Liege- und Fressbereich.

Diese Ausführungsform der Erfindung hat den Vorteil, dass keine gesonderte Überwachung der Tiere und kein gesondertes Melken einzelner Tiere mehr notwendig ist. Damit wird der Zeit- und Arbeitsaufwand für das Betriebspersonal eines Stalls für Tiere bei der Milchproduktion erheblich gesenkt. Ferner werden vorteilhafterweise durch dieses erfindungsgemäße Verfahren alle Tiere zwangsweise gleich oft gemolken. Dadurch wird vermieden, dass manche Tiere weniger oft oder gar nicht gemolken werden. Durch die mit dem erfindungs-gemäßen Verfahren ermöglichte Regelmäßigkeit des Melkens kann die durchschnittliche Produktivität einer Herde pro Tier deutlich verbessert werden. Außerdem ermöglicht dieses Verfahren zur Reinigung, dass der Liegebereich der Kühe und der Laufgang systematisch gereinigt werden können, ohne die Kühe in einer Ruhepause, insbesondere beim Wiederkäuen, zu stören.

Vorteilhaft können Tiere entsprechend ihrer Leistungsfähigkeit bei der Milchproduktion in verschiedene Gruppen eingeteilt werden und damit leichter eine Steigerung der Leistungsfähigkeit der verschiedenen Gruppen und damit der Gesamtmilchproduktion erzielt werden.

Gemäß einer weiteren vorteilhaften Ausführungsform der Erfindung umfasst das obige Verfahren folgende Schritte:
(a') ein Zusammentreiben einer weiteren Gruppe von Kühen, die sich in einem der weiteren Gruppe zugeordneten weiteren Liege- und Fressbereich des Stalls aufhalten, über einen weiteren Laufgang, der zwischen dem weiteren Liege- und Fressbereich angeordnet ist, auf den zweiten Laufgang, durch eine weitere Viehtreibereinrichtung, die von einem ersten Ende des weiteren Laufgangs zu einem zweiten Ende des weiteren Laufgangs bewegt wird, an dem der weitere Laufgang in den zweiten Laufgang mündet,
(b') ein Hineintreiben der weiteren Gruppe von Kühen von dem zweiten Laufgang, gegebenenfalls über einen Vorwartehof, in einen Melkraum, in dem die Kühe gemolken werden;
(c') ein Reinigen der Liegeboxen des der weiteren Gruppe zugeordneten Liegebereichs gemäß einem der oben beschriebenen Verfahren, und
(d') ein Zurücktreiben der gemolkenen Kühe in den der weiteren Gruppe zugeordneten Liege- und Fressbereich,
vorzugsweise mit der Maßgabe, dass die Schritte (a') bis (d') für die weitere Gruppe von Kühen nach den Schritten (a) bis (d) durchgeführt werden.
Bei dieser Ausführungsform kann der Raum eines Stalls sehr gut genutzt werden, und die Anzahl der Tiere, die in eine Gruppe eingeteilt werden, kann so zusammengefasst werden, dass die Produktivität der Tiere verbessert wird.

Bei einem besonders bevorzugten Verfahren gemäß der Erfindung, werden die Schritte (a') bis (d') mit mehreren weiteren Gruppen von Kühen durchgeführt, vorzugsweise der Art, dass die Schritte (a') bis (d') für jede weitere Gruppe von Kühen nach den Schritten (a') bis (d') für die vorhergehende Gruppe durchgeführt werden.

Bei einer bevorzugten Ausführungsform der vorliegenden Erfindung werden durch Betätigung einer ersten oder gegebenenfalls einer weiteren ersten Treib- und Absperrvorrichtung(en) zum Heraustreiben von Kühen aus ihrem Liegebereich jeweils alle Kühe einer Gruppe, die sich in dem ihrer Gruppe zugeordneten Liegebereich aufhalten, aus diesem Liegebereich gleichzeitig in den ersten oder gegebenenfalls weiteren Laufgang getrieben, und die erste oder gegebenenfalls die weitere(n) erste(n) Treib- und Absperrvorrichtung(en) ist oder sind so ausgebildet, dass der für die jeweilige Gruppe zugeordnete Liegebereich für alle Kühe dieser Gruppe unzugänglich abgesperrt wird.

Außerdem können durch Betätigung einer zweiten und gegebenenfalls einer weiteren zweiten Treib- und Absperrvorrichtung(en) zum Heraustreiben von Kühen aus ihrem Fressbereich in den ersten oder weiteren Laufgang zwischen Liege- und Fressbereich und zum Absperren ihres Fressbereichs, alle Kühe einer Gruppe, die sich in dem ihrer Gruppe zugeordneten Fressbereich aufhalten, aus diesem Fressbereich gleichzeitig in den ersten oder gegebenenfalls weiteren Laufgang getrieben werden.

Vorzugsweise erfolgt das Treiben der ersten Gruppe von Kühen in Schritt (b) in den zweiten Laufgang durch Betätigung einer Viehtreibereinrichtung, die von einem ersten Ende des ersten Laufgangs zu einem zweiten Ende des ersten Laufgangs, an dem der zweite Laufgang angeordnet ist, hinbewegt wird.

Außerdem kann das Treiben einer weiteren Gruppe von Kühen in Schritt (b') in den zweiten Laufgang durch Betätigung einer weiteren Viehtreibereinrichtung erfolgen, die von einem ersten Ende des weiteren Laufgangs zu einem zweiten Ende des weiteren Laufgangs, an dem der zweite Laufgang angeordnet ist, hinbewegt wird.

Besonders bevorzugt ist eine Ausführungsform des erfindungsgemäßen Verfahrens, bei der die Viehtreibereinrichtung oder die weitere Viehtreibereinrichtung als Mistschieber ausgeführt ist, und somit mit der Viehtreibereinrichtung oder der weiteren Viehtreibereinrichtung Mist und andere Verunreinigungen, einschließlich von Flüssigkeiten, in dem jeweiligen Laufgang geräumt werden können.

Bei einer weiteren vorteilhaften Ausführungsform der Erfindung wird vor der Betätigung der ersten und/oder zweiten sowie gegebenenfalls der weiteren ersten und/oder weiteren zweiten Treib- und Absperrvorrichtung, der Viehtreibereinrichtung sowie gegebenenfalls der weiteren Viehtreibereinrichtung(en) und/oder vor dem Hineintreiben einer Gruppe von Kühen von dem zweiten Laufgang, gegebenenfalls über einem Vorwartehof, in den Melkraum ein akustisches Signal, vorzugsweise ein Klingel- oder Hornsignal, und/oder optisches Signal gegeben. Somit kann erreicht werden, dass die Tiere durch Gewöhnung schon mit dem akustischen und/oder optischen Signal auf das Verfahren zur Reinigung der Liegeboxen und gegebenenfalls auf ein Melken vorbereitet werden. Bei mehreren Gruppen von Tieren können für jede Gruppe unterschiedliche akustische und/oder optische Signale eingesetzt werden, an die die Tiere gewöhnt werden können. Durch Gewöhnung an ein oder mehrere verschiedene Signale können die Tiere schon nach kurzer Zeit im Wesentlichen ohne mechanische oder elektrische Stimulation gemäß dem Verfahrensablauf der Erfindung durch einen Stall getrieben werden, so dass das Verfahren zur Reinigung der Liegeboxen, gegebenenfalls einschließlich einem Verfahren zum Melken, ohne Stress für die Tiere durchgeführt werden kann, obwohl die Liegeboxen häufiger als auf die bekannte Art und Weise pro Tag gereinigt und gegebenenfalls jedes Tier häufiger gemolken wird. Durch die Vermeidung von Stress kann die Milchproduktion der Tiere zusätzlich gesteigert werden.

Bei einer weiteren Ausführungsform des Verfahrens der Erfindung wird vor dem Treiben einer Gruppe von Kühen in den zweiten Laufgang eine Absperrung zwischen dem ersten Laufgang und dem zweiten Laufgang oder zwischen dem weiteren Laufgang und dem zweiten Laufgang geöffnet.

Ferner kann nach oder während dem Treiben einer Gruppe von Kühen, gegebenenfalls über einen Vorwartehof, in den Melkraum, die Absperrung zwischen dem ersten Laufgang und dem zweiten Laufgang oder zwischen dem weiteren Laufgang und dem zweiten Laufgang geschlossen werden.

Bei einer weiteren vorteilhaften Ausführungsform der Erfindung werden die Kühe unter Erkennung jeder einzelnen Kuh gemolken, und die gemolkene Milch jeder einzelnen Kuh wird analysiert, vorzugsweise durch Messung der Leitfähigkeit der Milch. Auf diese Weise kann vorteilhaft schon frühzeitig ein trächtiges Tier oder eine Veränderung im Gesundheitszustand eines Tiers erkannt werden. Besonders bevorzugt ist daher eine Ausführungsform des Verfahrens der Erfindung, bei der ein Vorbeitreiben der gemolkenen Kühen an einer Schleuse zur Erkennung der einzelnen Kühe und gegebenenfalls zur Absonderung einer Kuh aus der Gruppe erfolgt.

Das Verfahren gemäß der Erfindung hat den Vorteil, dass der Liegebereich und auch der erste oder weitere Laufgang systematisch gereinigt werden können. Bei einer vorteilhaften Ausführungsform der vorliegenden Erfindung werden daher die Liegeboxen einer Gruppe von Kühen vor dem Zurücktreiben der gemolkenen Kühe in den dieser Gruppe zugeordneten Liege- und Fressbereich gereinigt. Besonders bevorzugt wird bei der Reinigung der Liegeboxen mit der Liegebox begonnen, die an dem Ende des ersten oder weiteren Laufgangs angeordnet ist, das in den zweiten Laufgang mündet.

Unter einem weiteren Gesichtspunkt der Erfindung wird ein Stall bereitgestellt, der die oben beschriebene Reinigungseinrichtung umfasst. Außerdem kann der erfindungsgemäße Stall folgendes umfassen:
- mindestens einen Liegebereich, der nebeneinander angeordnete Liegeboxen für mindestens eine Gruppe von Kühen umfasst,
- einen Fressbereich mit Fressplätzen für die mindestens eine Gruppe von Kühen,
- einen ersten Laufgang der zwischen dem Liege- und Fressbereich der ersten Gruppe angeordnet ist,
- gegebenenfalls eine erste Treib- und Absperrvorrichtung zum Heraustreiben von Kühen aus ihrem Liegebereich in den ersten Laufgang und zum Absperren des Liegebereichs,
- gegebenenfalls eine zweite Treib- und Absperrvorrichtung zum Heraustreiben von Kühen aus ihrem Fressbereich in den ersten Laufgang und zum Absperren des Fressbereichs.

Besonders bevorzugt kann der Stall der Erfindung folgendes umfassen:
- einen zweiten Laufgang, in den der erste Laufgang mündet,
- eine Viehtreibereinrichtung zum Treiben der auf den ersten Laufgang zusammengetriebenen ersten Gruppe von Kühen von einem ersten Ende des ersten Laufgangs zu einem zweiten Ende des ersten Laufgangs und in den zweiten Laufgang hinein, wobei die Viehtreibereinrichtung von dem ersten Ende des Laufgangs zu dem zweiten Ende des Laufgangs hin- und herbewegbar ist;
- gegebenenfalls einen Vorwartehof;
- einen Melkraum,
- gegebenenfalls eine Schleuse zur Erkennung einzelner Kühe und gegebenenfalls zur Absonderung einer Kuh aus einer Gruppe.

Die vorliegende Erfindung hat den weiteren Vorteil, dass mit der erfindungsgemäßen Reinigungseinrichtung ein Stall mit sehr hohem Hygienestandard bereitgestellt werden kann, wobei kein erhöhter Raumbedarf für die Reinigungseinrichtung notwendig ist. Außerdem können eine große Anzahl an Liegeboxen in einer sehr kurzen Zeit sehr gründlich gereinigt werden. Ferner kann mit dem erfindungsgemäßen Stall der Raum sehr effizient ausgenutzt, da statt einer Vielzahl von Einrichtungen zum Viehtreiben, Misträumen und Reinigen der Liegeboxen gemäß einer besonders bevorzugten Ausführungsform der Erfindung eine für alle diese Funktionen geeignete Einrichtung bereitgestellt wird. Der erfindungsgemäße Stall kann insbesondere nur für eine Gruppe von Kühen, die einem Liege- und Fressbereich zugeordnet ist, ausgeführt werden. Wenn die Anzahl der Tiere erhöht und der Stall erweitert werden muss, kann auf einfache Art und Weise eine oder mehrere weitere Gruppe(n) von Tieren in einem Anbau oder in mehreren weiteren Anbau an den bisherigen Stall untergebracht werden, wobei der Melkraum, der zweite Laufgang und gegebenenfalls der Vorwartehof des bisherigen Stalls weiter genutzt werden können. So kann ein Stall über einen langen Zeitraum variabel genutzt werden kann, und auch die Investitionskosten können vorteilhaft über diesen langen Zeitraum verteilt werden.

### Melkverfahren der Erindung

Die oben genannte Aufgabe wird durch ein Verfahren zum Melken von Kühen gelöst, das folgendes umfasst:
(a) ein Zusammentreiben mindestens einer ersten Gruppe von Kühen, die sich in einem der ersten Gruppe zugeordneten Liege- und Fressbereich eines Stalls aufhalten, auf einen ersten Laufgang, der zwischen dem Liege- und Fressbereich angeordnet ist, wobei der Liegebereich nebeneinander liegende Liegeboxen umfasst;
(b) ein Treiben der in Schritt (a) auf den ersten Laufgang zusammengetriebenen ersten Gruppe von Kühen in einen zweiten Laufgang, der sich an einem Ende des ersten Laufgangs befindet;
(c) ein Hineintreiben der Gruppe von Kühen von dem zweiten Laufgang, gegebenenfalls über einen Vorwartehof, in einen Melkraum, in dem die Kühe gemolken werden; und
(d) ein Zurücktreiben der gemolkenen Kühe in den der ersten Gruppe zugeordneten Liege- und Fressbereich.

Das erfindungsgemäße Verfahren hat den großen Vorteil, dass keine gesonderte Überwachung der Tiere und kein gesondertes Melken einzelner Tiere mehr notwendig ist. Damit wird der Zeit- und Arbeitsaufwand für das Betriebspersonal eines Stalls für Tiere bei der Milchproduktion erheblich gesenkt. Ferner werden vorteilhafterweise durch dieses erfindungsgemäße Verfahren alle Tiere zwangsweise gleich oft gemolken. Dadurch wird vermieden, dass manche Tiere weniger oft oder gar nicht gemolken werden. Durch die mit dem erfindungs-gemäßen Verfahren ermöglichte Regelmäßigkeit des Melkens kann die durchschnittliche Produktivität einer Herde pro Tier deutlich verbessert werden. Die Anzahl der Melkvorgänge und die Zeitintervalle zwischen zwei Melkvorgängen zur Futter- und Wasseraufnahme können so zur Steigerung der Milchproduktion auf einfache Art und Weise festgelegt werden. Außerdem ermöglicht das Verfahren zum Melken gemäß der Erfindung, dass der Liegebereich der Kühe und der Laufgang oder die Laufgänge systematisch gereinigt werden können, ohne die Kühe in einer Ruhepause, insbesondere beim Wiederkäuen, zu stören. Auch damit kann eine Steigerung der Leistungsfähigkeit der Tiere für die Milchproduktion erreicht werden.

Bei einer weiteren Ausführungsform der Erfindung kann das Verfahren folgende weitere Schritte aufweisen:
(a') ein Zusammentreiben einer weiteren Gruppe von Kühen, die sich in einem der weiteren Gruppe zugeordneten weiteren Liege- und Fressbereich des Stalls aufhalten, auf einen weiteren Laufgang, der zwischen dem weiteren Liege- und Fressbereich angeordnet ist, wobei der weitere Liegebereich nebeneinander liegende Liegeboxen umfasst;
(b') ein Treiben der in Schritt (a') auf den weiteren Laufgang zusammengetriebenen weiteren Gruppe von Kühen in einen zweiten Laufgang, der sich an einem Ende des weiteren Laufgangs befindet;
(c') ein Hineintreiben der weiteren Gruppe von Kühen von dem zweiten Laufgang, gegebenenfalls über den Vorwartehof, in den Melkraum, in dem die Kühe gemolken werden; und
(d') ein Zurücktreiben der gemolkenen Kühe in den der weiteren Gruppe zugeordneten Liege- und Fressbereich,
vorzugsweise mit der Maßgabe, dass die Schritte (a') bis (d') für die weitere Gruppe von Kühen erst nach den Schritten (a) bis (d) für die erste Gruppe durchgeführt werden. Bei dieser Ausführungsform kann der Raum eines Stalls besser genutzt werden, und die Anzahl der Tiere, die in eine Gruppe eingeteilt werden, kann so zusammengefasst werden, dass die Produktivität der Tiere verbessert wird.

Vorteilhaft können Tiere entsprechend ihrer Leistungsfähigkeit bei der Milchproduktion in verschiedene Gruppen eingeteilt werden und damit leichter eine Steigerung der Leistungsfähigkeit der verschiedenen Gruppen und damit der Gesamtmilchproduktion erzielt werden.

Bei einem besonders bevorzugten Verfahren gemäß der Erfindung, werden die Schritte (a') bis (d') mit mehreren weiteren Gruppen von Kühen durchgeführt, vorzugsweise der Art, dass die Schritte (a') bis (d') für jede weitere Gruppe von Kühen nach den Schritten (a') bis (d') für die vorhergehende Gruppe durchgeführt werden.

Bei einer weiteren Ausführungsform des erfindungsgemäßen Verfahrens erfolgt das Zusammentreiben in Schritt (a) durch Betätigung einer ersten Treib- und Absperrvorrichtung zum Heraustreiben von Kühen aus ihrem Liegebereich in den ersten Laufgang und zum Absperren des Liegebereichs. Bei einer besonders bevorzugten Ausführungsform erfolgt ein Heraustreiben von Kühen aus ihrem Fressbereich in den ersten Laufgang und zum Absperren des Fressbereichs mit Hilfe einer zweiten Treib- und Absperrvorrichtung.

Ferner kann das Zusammentreiben in Schritt (a') durch Betätigung einer weiteren ersten Treib- und Absperrvorrichtung zum Heraustreiben von Kühen aus ihrem Liegebereich in den weiteren Laufgang und zum Absperren des Liegebereichs erfolgen. Und besonders bevorzugt kann mit einer weiteren zweiten Treib- und Absperrvorrichtung ein Heraustreiben von Kühen aus ihrem Fressbereich in den weiteren Laufgang und zum Absperren des Fressbereichs erfolgen.

Bei einer bevorzugten Ausführungsform der vorliegenden Erfindung werden durch Betätigung der ersten oder gegebenenfalls der weiteren ersten Treib- und Absperrvorrichtung(en) zum Heraustreiben von Kühen aus ihrem Liegebereich jeweils alle Kühe einer Gruppe, die sich in dem ihrer Gruppe zugeordneten Liegebereich aufhalten, aus diesem Liegebereich gleichzeitig in den ersten oder gegebenenfalls weiteren Laufgang getrieben, und die erste oder gegebenenfalls die weitere(n) erste(n) Treib- und Absperrvorrichtung(en) ist oder sind so ausgebildet, dass der für die jeweilige Gruppe zugeordnete Liegebereich für alle Kühe dieser Gruppe unzugänglich abgesperrt wird.

Außerdem können durch Betätigung der zweiten und gegebenenfalls der weiteren zweiten Treib- und Absperrvorrichtung(en) zum Heraustreiben von Kühen aus ihrem Fressbereich in den ersten oder weiteren Laufgang zwischen Liege- und Fressbereich und zum Absperren ihres Fressbereichs, alle Kühe einer Gruppe, die sich in dem ihrer Gruppe zugeordneten Fressbereich aufhalten, aus diesem Fressbereich gleichzeitig in den ersten oder gegebenenfalls weiteren Laufgang getrieben werden.

Vorzugsweise erfolgt das Treiben der ersten Gruppe von Kühen in Schritt (b) in den zweiten Laufgang durch Betätigung einer Viehtreibereinrichtung, die von einem ersten Ende des ersten Laufgangs zu einem zweiten Ende des ersten Laufgangs, an dem der zweite Laufgang angeordnet ist, hinbewegt wird.

Außerdem kann das Treiben einer weiteren Gruppe von Kühen in Schritt (b') in den zweiten Laufgang durch Betätigung einer weiteren Viehtreibereinrichtung erfolgen, die von einem ersten Ende des weiteren Laufgangs zu einem zweiten Ende des weiteren Laufgangs, an dem der zweite Laufgang angeordnet ist, hinbewegt wird.

Besonders bevorzugt ist eine Ausführungsform des erfindungsgemäßen Verfahrens, bei der die Viehtreibereinrichtung oder die weitere Viehtreibereinrichtung als Mistschieber ausgeführt ist, und somit mit der Viehtreibereinrichtung oder der weiteren Viehtreibereinrichtung Mist und andere Verunreinigungen, einschließlich von Flüssigkeiten, in dem jeweiligen Laufgang geräumt werden können.

Bei einer weiteren vorteilhaften Ausführungsform der Erfindung wird vor der Betätigung der ersten und/oder zweiten sowie gegebenenfalls der weiteren ersten und/oder weiteren zweiten Treib- und Absperrvorrichtung, der Viehtreibereinrichtung sowie gegebenenfalls der weiteren Viehtreibereinrichtung(en) und/oder vor dem Hineintreiben einer Gruppe von Kühen von dem zweiten Laufgang, gegebenenfalls über einem Vorwartehof, in den Melkraum ein akustisches Signal, vorzugsweise ein Klingel- oder Hornsignal, und/oder ein optisches Signal gegeben. Somit kann erreicht werden, dass die Tiere durch Gewöhnung schon mit dem akustischen und/oder optischen Signal auf das Melken vorbereitet werden. Bei mehreren Gruppen von Tieren können für jede Gruppe unterschiedliche akustische und/oder optische Signale eingesetzt werden, an die die Tiere gewöhnt werden können. Durch Gewöhnung an ein oder mehrere verschiedene Signale können die Tiere schon nach kurzer Zeit im Wesentlichen ohne mechanische oder elektrische Stimulation gemäß dem Verfahrensablauf der Erfindung durch einen Stall getrieben werden, so dass das Verfahren zum Melken ohne Stress für die Tiere durchgeführt werden kann, obwohl jedes Tier häufiger als auf die bekannte Art und Weise am Tag gemolken wird. Durch die Vermeidung von Stress kann die Milchproduktion der Tiere zusätzlich gesteigert werden.

Bei einer weiteren Ausführungsform des Verfahrens der Erfindung wird vor dem Treiben einer Gruppe von Kühen in den zweiten Laufgang eine Absperrung zwischen dem ersten Laufgang und dem zweiten Laufgang oder zwischen dem weiteren Laufgang und dem zweiten Laufgang geöffnet.

Ferner kann nach oder während dem Treiben einer Gruppe von Kühen, gegebenenfalls über einen Vorwartehof, in den Melkraum, die Absperrung zwischen dem ersten Laufgang und dem zweiten Laufgang oder zwischen dem weiteren Laufgang und dem zweiten Laufgang geschlossen werden.

Bei einer weiteren vorteilhaften Ausführungsform der Erfindung werden die Kühe unter Erkennung jeder einzelnen Kuh gemolken, und die gemolkene Milch jeder einzelnen Kuh wird analysiert, vorzugsweise durch Messung der Leitfähigkeit der Milch. Auf diese Weise kann vorteilhaft schon frühzeitig ein trächtiges Tier oder eine Veränderung im Gesundheitszustand eines Tiers erkannt werden. Besonders bevorzugt ist daher eine Ausführungsform des Verfahrens der Erfindung, bei der ein Vorbeitreiben der gemolkenen Kühen an einer Schleuse zur Erkennung der einzelnen Kühe und gegebenenfalls zur Absonderung einer Kuh aus der Gruppe erfolgt.

Das Verfahren zum Melken von Kühen gemäß der Erfindung hat den Vorteil, dass der Liegebereich und auch der erste oder weitere Laufgang systematisch gereinigt werden können. Bei einer vorteilhaften Ausführungsform der vorliegenden Erfindung werden daher die Liegeboxen einer Gruppe von Kühen vor dem Zurücktreiben der gemolkenen Kühe in den dieser Gruppe zugeordneten Liege- und Fressbereich gereinigt. Besonders bevorzugt wird bei der Reinigung der Liegeboxen mit der Liegebox begonnen, die an dem Ende des ersten oder weiteren Laufgangs angeordnet ist, das in den zweiten Laufgang mündet.

Das Verfahren kann so ausgeführt werden, dass das Reinigen der Liegeboxen in dem Drittel der einzelnen Liegeboxen durchgeführt wird, das dem ersten oder weiteren Laufgang zugewandt ist. Diese Ausführungsform ist zeitsparend und effektiv, da im Wesentlichen nur in diesem Bereich der Liegeboxen Verunreinigungen erfolgen. Bei einer weiteren Ausführungsform wird jeweils die gesamte Liegefläche der Liegebox gereinigt.

Weiterhin ist bevorzugt dass nach dem Reinigen der Liegeboxen frische Einstreu, die vorzugsweise Strohhäcksel oder Sägemehl umfasst, auf die Liegeboxen aufgebracht wird, vorzugsweise auf das Drittel der einzelnen Liegeboxen, das dem ersten oder weiteren Laufgang zugewandt ist.

Unter einem weiteren Gesichtspunkt der Erfindung wird eine Treib- und Absperrvorrichtung zum Heraustreiben von Kühen aus nebeneinander angeordneten Liegeboxen in einen an die Liegeboxen angrenzenden Laufgang und zum Absperren der Liegeboxen oder zum Heraustreiben von Kühen aus nebeneinander angeordneten Fressplätzen in einen an die Liegeboxen angrenzenden Laufgang und zum Absperren der Fressplätze bereitgestellt, so dass diese für die herausgetriebenen Kühe nicht mehr zugänglich sind. Diese Treib- und Absperrvorrichtung umfasst einen in jede Liegebox oder Fressplatz hinein bewegbaren Auftriebsstimulator, der zum Heraustreiben einer Kuh aus ihrer Liegebox oder Fressplatz in die Liegebox oder den Fressplatz hineinbewegt wird und zum Absperren dort drinnen belassen werden kann.

Die Treib- und Absperrvorrichtung kann einen Auftriebsstimulator aufweisen, der einen mit Schwachstrom beaufschlagbaren Kontakt oder Draht, einen optischen oder akkustischen Signalgeber, ein Schild und/oder einen ausfahrbaren Teleskoparm umfasst.

Eine bevorzugte Treib- und Absperrvorrichtung der Erfindung ist zum Heraus-treiben von Kühen aus nebeneinander angeordneten Liegeboxen und zum Absperren der Liegeboxen eingerichtet.

Eine weitere bevorzugte Treib- und Absperrvorrichtung der Erfindung ist zum Heraustreiben von Kühen aus nebeneinander angeordneten Fressplätzen und zum Absperren der Fressplätze eingerichtet.

Unter einem weiteren Gesichtspunkt der Erfindung wird ein Stall bereitgestellt, der zum Melken von Kühen gemäß der Erfindung eingerichtet ist. Dieser Stall umfasst:
- einen Liegeboxen umfassenden Liegebereich für mindestens eine Gruppe von Kühen,
- einen Fressbereich mit Fressplätzen für die mindestens eine Gruppe von Kühen,
- einen ersten Laufgang der zwischen dem Liege- und Fressbereich der ersten Gruppe angeordnet ist, der an einem seiner Enden in einen zweiten Laufgang mündet,
- gegebenenfalls einen Vorwartehof,
- einen Melkraum, und
- mindestens eine Einrichtung zum Heraustreiben von Kühen aus ihrem Liegebereich in den ersten Laufgang und in den zweiten Laufgang.

Die Einrichtung zum Heraustreiben von Kühen aus ihrem Liegebereich in den ersten Laufgang und in den zweiten Laufgang umfasst vorzugsweise eine der oben beschriebenen Treib- und Absperrvorrichtungen.

Ein bevorzugter Stall umfasst insbesondere:
- eine erste Treib- und Absperrvorrichtung zum Heraustreiben von Kühen aus ihrem Liegebereich in den ersten Laufgang und zum Absperren des Liegebereichs, wie sie oben beschrieben ist und/oder
- eine zweite Treib- und Absperrvorrichtung zum Heraustreiben von Kühen aus ihrem Fressbereich in den ersten Laufgang und zum Absperren des Fressbereichs, wie sie oben beschrieben ist.

Bei einer besonders bevorzugten Ausführungsform der Erfindung umfasst der Stall:
- eine Viehtreibereinrichtung zum Treiben der auf den ersten Laufgang zusammengetriebenen ersten Gruppe von Kühen von einem ersten Ende des ersten Laufgangs zu einem zweiten Ende des ersten Laufgangs und in den zweiten Laufgang hinein,
- gegebenenfalls eine Schleuse zur Erkennung einzelner Kühe und gegebenenfalls zur Absonderung einer Kuh aus einer Gruppe,
- gegebenenfalls eine Reinigungseinrichtung zum Reinigen der Liegeboxen, und
- gegebenenfalls eine Streueinrichtung zum Eintragen frischer Einstreu in die Liegeboxen.

### Kurze Figurenbeschreibung

- Fig. 1: zeigt eine Draufsicht auf einen erfindungsgemäßen Stall, der zur Durchführung des erfindungsgemäßen Reinigungsverfahrens eingerichtet ist.
- Fig. 2: zeigt einen Querschnitt durch einen Teil des Stalls von Fig. 1 gemäß der Linie II-II.
- Fig. 3: zeigt einen Querschnitt gemäß der Fig. 2, wobei eine Treib- und Absperrvorrichtung zum Heraustreiben einer Kuh aus ihrem Liegebereich betätigt ist.
- Fig. 4: zeigt einen Querschnitt durch einen Teil des Stalls von Fig. 1 gemäß der Linie IV-IV.
- Fig. 5: zeigt einen Querschnitt durch einen Teil des Stalls von Fig. 1 wie in Fig. 4 gemäß einer weiteren Ausführungsform.

Die vorliegende Erfindung wird nun in weiteren Einzelheiten mit Hilfe der Figuren und anhand bevorzugter Ausführungsformen beschrieben.

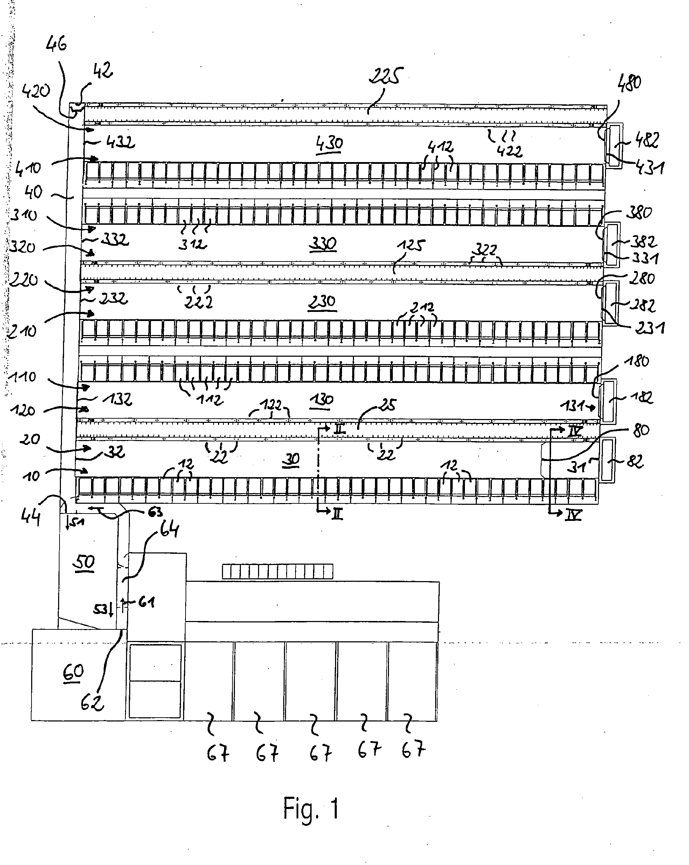

Die Fig. 1 zeigt eine Draufsicht auf einen erfindungsgemäßen Stall, der zur Durchführung des erfindungsgemäßen Melkverfahrens eingerichtet ist. Zur Vereinfachung der Darstellung sind in Fig. 1 keine Kühe gezeigt. Der Stall umfasst einen Liegebereich 10, der einer ersten Gruppe von Kühen zugeordnet werden kann. Dieser Liegebereich umfasst vierzig nebeneinander liegende Liegeboxen 12, in denen sich die Kühe zum Wiederkäuen oder Ausruhen hinlegen können. Außerdem weist der Stall einen Fressbereich 20 auf, der ebenfalls der ersten Gruppe von Kühen zugeordnet ist. Der Fressbereich 20 hat ebenfalls vierzig Fressplätze 22 an einem Futtertisch 25 für die erste Gruppe von Kühen. Zwischen dem Liegebereich 10 und dem Fressbereich 20 der ersten Gruppe ist ein erster Laufgang 30 angeordnet, der an einem seiner Enden, dem Ende 32, in einen zweiten Laufgang 40 mündet. Ferner weist der Stall einen Vorwartehof 50 und einen Melkraum 60 und eine Einrichtung zum Heraustreiben der Kühe der ersten Gruppe aus ihrem Liegebereich 10 in den ersten Laufgang 30 und in den zweiten Laufgang 40 auf. Gemäß einer bevorzugten Ausführungsform der Erfindung weist der Stall ferner einen Liegebereich 110 auf, der einer zweiten Gruppe von Kühen zugeordnet ist. Dieser zweite Liegebereich umfasst weitere vierzig nebeneinander liegende Liegeboxen 112. Außerdem weist der Stall einen weiteren Fressbereich 120 mit vierzig Fressplätzen 122 an dem Futtertisch 25 für die zweite Gruppe von Kühen auf. Bei einer anderen Ausführungsform der Erfindung weist der zweite Fressbereich 120 einen eigenen Futtertisch auf. Um den Raum des Stalls optimal auszunutzen kann der Futtertisch 25 für zwei Gruppen von Kühen verwendet werden, wie in Fig. 1 gezeigt. Zwischen dem Liegebereich 110 und dem Fressbereich 120 der zweiten Gruppe ist ein weiterer Laufgang 130 angeordnet, der an einem seiner Enden, dem Ende 132 in den zweiten Laufgang 40 mündet. Ferner weist der Stall eine Einrichtung zum Heraustreiben der Kühe der zweiten Gruppe aus ihrem Liegebereich 110 in den weiteren Laufgang 130 und in den zweiten Laufgang 40 auf. Der in Fig. 1 gezeigte Stall weist zudem einen Liegebereich 210 auf, der einer dritten Gruppe von Kühen zugeordnet ist. Dieser dritte Liegebereich umfasst weitere vierzig nebeneinander liegende Liegeboxen 212. Außerdem weist der Stall einen weiteren Fressbereich 220 mit weiteren vierzig Fressplätzen 222 an dem Futtertisch 125 für die dritte Gruppe von Kühen auf. Zwischen dem Liegebereich 210 und dem Fressbereich 220 der dritten Gruppe ist ein weiterer Laufgang 230 angeordnet, der an einem seiner Enden, dem Ende 232 in den zweiten Laufgang 40 mündet. Ferner weist der Stall eine Einrichtung zum Heraustreiben der Kühe der dritten Gruppe aus ihrem Liegebereich 210 in den weiteren Laufgang 230 und in den zweiten Laufgang 40 auf. Weiterhin ist in dem Stall ein Liegebereich 310 zu sehen, der einer vierten Gruppe von Kühen zugeordnet ist. Dieser vierte Liegebereich umfasst nebeneinander liegende Liegeboxen 312. Außerdem weist der Stall einen weiteren Fressbereich 320 mit Fressplätzen 322 an dem Futtertisch 125 für die vierte Gruppe von Kühen auf. Bei einer anderen Ausführungsform der Erfindung weist der vierte Fressbereich 320 einen eigenen Futtertisch auf. Um den Raum des Stalls optimal auszunutzen kann der Futtertisch 125 aber für die dritte und vierte Gruppe von Kühen verwendet werden, wie in Fig. 1 gezeigt ist. Zwischen dem Liegebereich 310 und dem Fressbereich 320 der vierten Gruppe ist ein weiterer Laufgang 330 angeordnet, der an einem seiner Enden, dem Ende 332 in den zweiten Laufgang 40 mündet. Ferner weist der Stall eine Einrichtung zum Heraustreiben der Kühe der vierten Gruppe aus ihrem Liegebereich 310 in den weiteren Laufgang 330 und in den zweiten Laufgang 40 auf. Ferner weist der Stall einen Liegebereich 410 auf, der einer fünften Gruppe von Kühen zugeordnet ist. Dieser fünfte Liegebereich umfasst vierzig weitere nebeneinander liegende Liegeboxen 412. Außerdem weist der Stall einen weiteren Fressbereich 420 mit vierzig weiteren Fressplätzen 422 an dem Futtertisch 225 für die fünfte Gruppe von Kühen auf. Zwischen dem Liegebereich 410 und dem Fressbereich 420 der fünften Gruppe ist ein weiterer Laufgang 430 angeordnet, der an einem seiner Enden, dem Ende 432, in den zweiten Laufgang 40 mündet. Ferner weist der Stall eine Einrichtung zum Heraustreiben der Kühe der fünften Gruppe aus ihrem Liegebereich 410 in den weiteren Laufgang 430 und in den zweiten Laufgang 40 auf.

Die Anzahl der Kühe, die einer Gruppe zugeordnet wird, ist nicht auf vierzig beschränkt. Der Stall kann vielmehr sehr variabel an alle möglichen Begrenzungen, die auf einem Bauernhof für einen Stall bestehen angepasst werden. Vorzugsweise weist der einer Gruppe von Kühen zugeordnete Liegebereich eine Liegebox pro Kuh der Gruppe auf. Dies hat den Vorteil, dass sich gegebenenfalls alle Kühe einer Gruppe zwischen zwei Melkvorgängen hinlegen können. Denn eine lange Liegezeit führt zu intensivem Wiederkäuen, hoher Speichelsekretion, stabilem Pansenmilieu, effizienter Verwertung des Futters, hoher Blutzirkulation durch das Euter und somit zu einer optimalen Milchsynthese und somit zu einer hohen Milchproduktion. Außerdem beugt ein langes Liegen bei den Kühen subklinischen Pansenazidosen und Klauenrehe (Laminitis) vor. Ferner werden die Klauen sowie der Bandapparat und die Gelenke der Kühe entlastet. So wird das Wohlbefinden und die Gesundheit der Kühe und somit die Leistungsfähigkeit der Kühe für die Milchproduktion verbessert.
Für eine optimale Milchproduktion ist die Futteraufnahme zwar ebenfalls ein wesentlicher Faktor, doch muss die Anzahl der Fressplätze nicht der Anzahl der Liegeboxen einer Gruppe von Kühen entsprechen, da die Kühe üblicherweise längere Zeit liegen und dabei wiederkäuen oder ausruhen als sie Zeit damit verbringen zu fressen. So ist in der Regel eine Anzahl von Fressplätzen in der Höhe von etwa 75% der Anzahl der Liegeboxen oder Kühe, die in einer Gruppe zusammengefasst werden, ausreichend. Der auf diese Weise verbleibende Platz in einem Fressbereich, der nicht für Fressplätze genutzt wird, kann für eine oder mehrere Tränken pro Fressbereich einer Gruppe von Kühen genutzt werden. Bei einer weiteren Ausführungsform werden Fressplätze vorgesehen, die eine geringere Breite aufweisen als die Liegeboxen. Zum Beispiel sind Fressplätze mit einer Breite von etwa 75-85 cm und Liegeboxen mit einer Breite von 120-130 cm ausreichend. So kann auch Platz für eine oder mehrere Tränken gewonnen werden, wobei die Anzahl der Fressplätze der Anzahl der Liegeboxen entspricht. Dies hat den Vorteil, dass ein Liege- und Fressbereich bereitgestellt werden kann, der für jede Kuh, die diesem Liege- und Fressbereich zugeordnet wird einen Liege- und Fressplatz vorsieht. Vorteilhafterweise ist (sind) die Tränke(n) zur Wasseraufnahme für mehrere Tiere eingerichtet, insbesondere bei Kühen, da eine Kuh als Herdentier bevorzugt in Gesellschaft Wasser zu sich nimmt. Eine ausreichende Wasseraufnahme ist ebenfalls ein wichtiger Faktor für eine hohe Milchproduktion. Bei einer besonders bevorzugten Ausführungsform der Erfindung weist der Stall einen zusätzlichen Tränkenbereich, gegebenenfalls in einem zusätzlichen (nicht gezeigten) Tänkenraum, auf, in den die Tiere nach einem Melken und vor einem Zurücktreiben in den der Gruppe zugeordneten Liege- und Fressbereich geleitet oder getrieben werden. Auf diese Weise können die Kühe zu einer optimalen Wasseraufnahme gebracht werden. Eine hohe Wasseraufnahme unmittelbar nach dem Melken ist vorteilhaft, da sich gezeigt hat, dass eine Wasseraufnahme unmittelbar nach dem Melken, zu einer Steigerung der Milchproduktion führt. Gemäß dieser bevorzugten Ausführungsform kann eine Gewöhnung aller Tiere einer Gruppe an eine optimierte Wasseraufnahme erreicht werden, womit eine verbesserte Gesamtmilchproduktion erzielt werden kann. Vorzugsweise sollen die Tiere mehr als 30% ihres täglichen Wasserbedarfs unmittelbar nach dem Melken aufnehmen. Gemäß der Ausführungsform der Erfindung, bei der die Kühe unmittelbar nach dem Melken in einen Tränkenbereich geleitet oder geführt werden, kann die Wasseraufnahme unmittelbar nach einem Melken in der Höhe von mehr als 30% des täglichen Wasserbedarfs leicht antrainiert werden.

Bei einer bevorzugten Ausführungsform des Stalls der Erfindung umfasst der Stall eine Einrichtung zum Heraustreiben von Kühen aus ihrem Liegebereich in den ersten 30 oder weiteren Laufgang 130, 230, 230, 330 oder 430 und in den zweiten Laufgang 40. Diese Einrichtung umfasst vorzugsweise eine Treib- und Absperrvorrichtung zum Heraustreiben von Kühen aus ihren Liegeboxen 12, 112, 212, 312 oder 412 in einen an die Liegeboxen angrenzenden Laufgang 30, 130, 230, 230, 330 oder 430 und zum Absperren der Liegeboxen, so dass diese für die herausgetriebenen Kühe nicht mehr zugänglich sind. Diese Treib- und Absperrvorrichtung umfasst einen in jede Liegebox hinein bewegbaren Auftriebsstimulator, der zum Heraustreiben einer Kuh aus ihrer Liegebox in diese hinein bewegt wird und zum Absperren dort drinnen belassen werden kann.

An dem Ende 32 des ersten Laufgangs 30, an dem der erste Laufgang in den zweiten Laufgang 40 mündet ist vorzugsweise eine Absperrung oder ein Tor vorgesehen, damit die Kühe, die dem ersten Liege- und Fressbereich 10, 20 zugeordnet sind, diesen nicht verlassen können, wenn die Tiere gerade nicht gemolken werden sollen und sich in dem Liege- und Fressbereich aufhalten. Ferner dient eine solche Absperrung oder Tor dazu, dass kein Tier einer anderen Gruppe in den Liege- und Fressbereich 10, 20 der ersten Gruppe eindringen kann. An den jeweiligen Enden 132, 232, 332, 432 der Laufgänge 130, 230, 330, 430, an denen diese Laufgänge in den zweiten Laufgang 40 münden, kann jeweils eine entsprechende Absperrung oder ein Tor vorgesehen sein, damit die Kühe, die den jeweiligen weiteren ersten Liege- und Fressbereichen 110,120; 210, 220; 310, 320; 410, 420 zugeordnet sind, diese nicht verlassen können, wenn die Tiere gerade nicht gemolken werden sollen und sich in dem Liege- und Fressbereich aufhalten. Ferner dient eine solche Absperrung oder Tor dazu, dass kein Tier einer anderen Gruppe in den Liege- und Fressbereich der jeweiligen weiteren Gruppe eindringen kann.

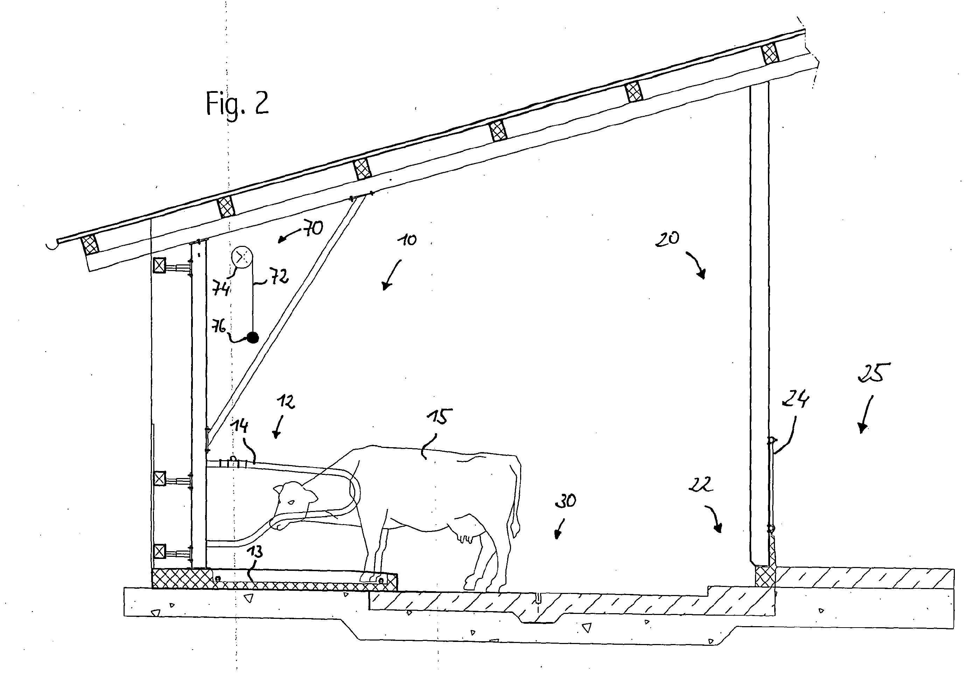

In Fig. 2 ist ein Teil des Stalls von Fig. 1 als Querschnitt gemäß der Linie II-II gezeigt. Eine Kuh 15, die in dem ihrer Gruppe zugeordneten Liege- und Fressbereich 10 und 20 frei umher laufen kann, betritt dabei gerade die Liegebox 12 mit der Liegefläche 13. Die Liegebox ist von den benachbarten Liegeboxen jeweils über einen Bügel 14 abgetrennt. Dem Liegebereich 10 gegenüber ist der Fressbereich 20 angeordnet, der die Fressplätze 22 und den Futtertisch 25 umfasst. Der Futtertisch 25 ist gemäß einer bevorzugten Ausführungsform durch ein Selbstfanggitter 24, wie es zum Beispiel in den Patenten DE 198 42 412 und DE 101 16 559 offenbart ist, von dem Fressplatz 22 aus für die Kuh 15 erreichbar. Besonders bevorzugt kann ein automatisch verriegelbares Selbstfang- oder Fressgitter eingesetzt werden. Somit kann vor dem Heraustreiben einer Gruppe aus ihrem Liege- und Fressbereich in den zweiten Laufgang der Futtertisch für die Futteraufnahme gesperrt werden. Diese Ausführungsform ist besonders vorteilhaft, wenn ein Futtertisch für zwei Gruppen von Tieren vorgesehen ist, wie z.B. bei Futtertisch 25 und 125. Somit kann durch entsprechende Steuerung von besonders bevorzugten steuerbaren Selbstfang- oder Fressgittern vermieden werden, dass die Tiere einer Gruppe einer anderen Gruppe, die Zugang zu dem gleichen Futtertisch hat, das Futter wegnimmt. Der Futtertisch kann gemäß dem herkömmlichen Stand der Technik ausgestattet sein und beispielsweise ein Förderband und/oder ein Hängebahnsystem umfassen. Besonders bevorzugt ist das Förderband und/oder das Hängebahnsystem so eingerichtet und steuerbar, dass Futter automatisch, vorzugsweise bestimmte Mengen an Futter zu vorbestimmtem Zeitpunkten, nachgeliefert und/oder Futter oder Futterreste wieder entfernt werden können. Besonders bevorzugt erfolgt ein Entfernen von Futter oder Futterresten vor dem Heraustreiben von Tieren aus ihren Liegeboxen, so dass die Tiere keine Veranlassung haben sich in dem Futterbereich aufzuhalten. Anschließend kann ein Selbstfang- oder Fressgitter gesperrt werden, sodass die Tiere keinen Zugang mehr zu dem Futtertisch haben. Bei einer besonders vorteilhaften Ausführungsform der Erfindung ist ein Futtertisch, der zwei Gruppen von Tieren zugeordnet ist, wie z.B. Futtertisch 25 und 125, in Längsrichtung zweigeteilt, so dass ein Teil des in Längsrichtung geteilten Futtertisches nur für die eine der zwei Gruppen von Tieren zugänglich ist, und der andere Teil des in Längsrichtung geteilten Futtertisches nur für die andere der zwei Gruppen zugänglich ist. Die oben beschriebene Treib- und Absperrvorrichtung zum Heraustreiben von Kühen aus ihren Liegeboxen 12, 112, 212, 312 oder 412 in einen an die Liegeboxen angrenzenden Laufgang 30, 130, 230, 230, 330 oder 430 und zum Absperren der Liegeboxen, so dass diese für die herausgetriebenen Kühe nicht mehr zugänglich sind, umfasst gemäß der in Fig. 2 gezeigten Ausführungsform 70 einen Auftriebsstimulator 76, der über ein Seil oder einen Draht 72 an dessen Ende er befestigt ist, über die Rolle 74 in die Liegebox 12 hinein bewegt werden kann. Die Treib- und Absperrvorrichtung gemäß der Erfindung umfasst somit in jede Liegebox hinein bewegbare Auftriebsstimulatoren, die zum Heraustreiben einer Kuh aus ihrer Liegebox in diese hinein bewegt und zum Absperren der Liegebox dort drinnen belassen werden können. Besonders bevorzugt ist für jede Liegebox mindestens ein Auftriebsstimulator vorgesehen. Zum Absperren einer Liegebox 12 kann der Auftriebsstimulator 76 in der Liegebox 12 belassen werden. Gemäß Fig. 2 befindet sich der Auftriebsstimulator 76 noch weit oberhalb der Liegebox 12, so dass die Kuh 15 unbehindert die Liegebox 12 betreten kann.

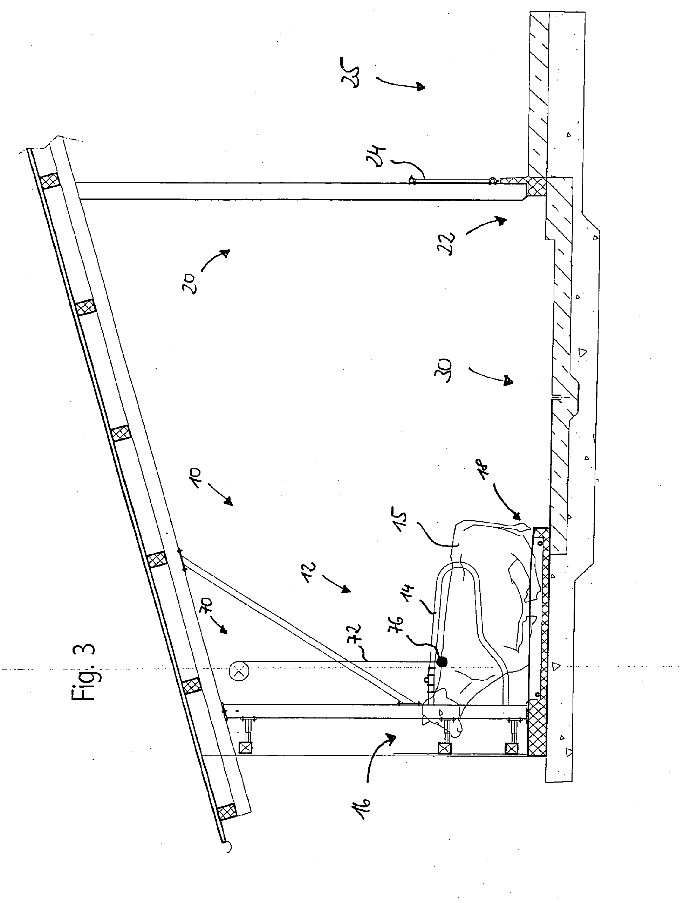

In Fig. 3 ist der Teilquerschnitt gemäß Fig. 2 gezeigt, wobei die Kuh 15 zum Wiederkäuen oder Ausruhen in der Liegebox 12 auf der Liegefläche 13 liegt. Zum Auf- und Heraustreiben der Kuh 15 aus der Liegebox 12 ist die Treib- und Absperrvorrichtung 70 betätigt. Dabei ist der Auftriebsstimulator 76, der an einem Ende des Seils oder Drahts 72 befestigt ist, über die Rolle 74 auf die Kuh herunter gelassen. Je nach Art des Auftriebsstimulators 76 kann die Position der Rolle 74 oberhalb der Liegebox gewählt werden, so dass der Auftriebsstimulator 76 die Kuh 15 nach einem Herablassen des Auftriebsstimulators an einer gewünschten Stelle kontaktiert. Bei einer weiteren bevorzugten Ausführungsform werden mehr als ein Auftriebsstimulator in die Liegebox 12 hinein bewegt.

Bei einer weiteren Ausführungsform der Erfindung umfasst eine Treib- und Absperrvorrichtung
(i) einen quer zu den Abtrennungen 14 verlaufenden und sich über die gesamte Breite der nebeneinander angeordneten Liegeboxen 12 erstreckenden Querträger, und
(ii) an dem Querträger befestigte und sich in die Liegeboxen hinein bewegbare Auftriebsstimulatoren,
wobei der Querträger und/oder die Auftriebsstimulatoren von den Kopfenden 16 der Liegeboxen 12 zu den an dem Laufgang 30 angrenzenden Enden 18 der Liegeboxen bewegbar sind.

Als Auftriebsstimulator ist zum Beispiel
- ein mit Schwachstrom beaufschlagbarer Kontakt oder Draht,
- ein optischer oder akustischer Signalgeber,
- ein Schild,
- ein ausfahrbarer Teleskoparm oder
- eine Kombination aus mindestens zwei der genannten Stimulatoren geeignet.

Der Stall gemäß der Erfindung umfasst eine Reinigungseinrichtung nach einem der Ansprüche 1 bis 6. Gemäß einer bevorzugten Ausführungsform kann er folgendes umfassen:
- mindestens einen Liegebereich 10, der nebeneinander angeordnete Liegeboxen 12 für mindestens eine Gruppe von Kühen umfasst,
- einen Fressbereich 20 mit Fressplätzen 22 für die mindestens eine Gruppe von Kühen,
- einen ersten Laufgang 30 der zwischen dem Liege- und Fressbereich der ersten Gruppe angeordnet ist,
- gegebenenfalls eine erste Treib- und Absperrvorrichtung 70 zum Heraustreiben von Kühen aus ihrem Liegebereich (10) in den ersten Laufgang 30 und zum Absperren des Liegebereichs und
- gegebenenfalls eine zweite Treib- und Absperrvorrichtung zum Heraustreiben von Kühen aus ihrem Fressbereich 20 in den ersten Laufgang 30 und zum Absperren des Fressbereichs 20.

Weiterhin umfasst eine bevorzugte Ausführungsform des Stalls, insbesondere im Zusammenhang mit der erfindungsgemäßen Reinigungseinrichtung:
- einen zweiten Laufgang 40, in den der erste Laufgang 30 mündet,
- eine Viehtreibereinrichtung 80 zum Treiben der auf den ersten Laufgang 30 zusammengetriebenen ersten Gruppe von Kühen von einem ersten Ende 31 des ersten Laufgangs zu einem zweiten Ende 32 des ersten Laufgangs 30 und in den zweiten Laufgang hinein;
- gegebenenfalls einen Vorwartehof 50;
- einen Melkraum 60,
- gegebenenfalls eine Schleuse zur Erkennung einzelner Kühe und gegebenenfalls zur Absonderung einer Kuh aus einer Gruppe.

Eine besonders bevorzugte Ausführungsform des erfindungsgemäßen Stalls umfasst:
- die erste Treib- und Absperrvorrichtung 70 zum Heraustreiben von Kühen aus ihrem Liegebereich 10 in den ersten Laufgang 30 und zum Absperren des Liegebereichs 10 und/oder
- eine zweite Treib- und Absperrvorrichtung (nicht gezeigt) zum Heraustreiben von Kühen aus ihrem Fressbereich 20 in den ersten Laufgang 30 und zum Absperren des Fressbereichs 20. Die zweite Treib- und Absperrvorrichtung zum Heraustreiben von Kühen aus ihrem Fressbereich 20 in den ersten Laufgang 30 und zum Absperren des Fressbereichs 20 kann wie die oben beschriebene, insbesondere die in Fig. 2 und 3 gezeigte, Treib- und Absperrvorrichtung 70 ausgebildet sein.

Bei mehreren Gruppen von Kühen, die weiteren Liege- und Fressbereichen zugeordnet sein können, kann der erfindungsgemäße Stall in entsprechender Weise
- eine oder mehrere weitere erste Treib- und Absperrvorrichtung(en) zum Heraustreiben von Kühen aus ihrem/ihren Liegebereich(en) 110, 210, 310, 410 in den/die weiteren Laufgang/Laufgänge 130, 230, 330, 430 und zum Absperren des/der Liegebereichs/Liegebereiche 110, 210, 310, 410 und/oder
- eine oder mehrere weitere zweite Treib- und Absperrvorrichtung(en) zum Heraustreiben von Kühen aus ihrem/ihren Fressbereich(en) 120, 220, 320, 420 in den/die weiteren Laufgang/Laufgänge 130, 230, 330, 430 und zum Absperren des Fressbereichs/der Fressbereiche 120, 220, 320, 420 umfassen.

Ferner weist eine weitere bevorzugte Ausführungsform der Einrichtung zum Heraustreiben von Kühen aus ihrem Liegebereich in den ersten 30 bzw. weiteren Laufgang 130, 230, 230, 330, 430 und in den zweiten Laufgang 40 eine Viehtreibereinrichtung 80 auf, die eingerichtet ist zum Treiben der auf den ersten Laufgang 30 zusammengetriebenen ersten Gruppe von Kühen von einem ersten Ende 31 des ersten Laufgangs 30 zu einem zweiten Ende 32 des ersten Laufgangs 30 und in den zweiten Laufgang 40 hinein und gegebenenfalls eine oder mehrere weitere Viehtreibereinrichtung(en) 180, 280, 380, 480 zum Treiben der auf den weiteren Laufgang 130, 230, 330, 430 zusammengetriebenen weiteren Gruppe(n) von Kühen von dem jeweiligen ersten Ende 131, 231, 331, 431 der weiteren Laufgänge 130, 230, 330, 430 zu dem jeweiligen zweiten Ende 132, 232, 332, 432 der weiteren Laufgänge 130, 230, 330, 430 und in den zweiten Laufgang 40 hinein.

Wenn die Viehtreibereinrichtungen 80, 180, 280, 380, 480 gemäß der Fig. 1 von rechts nach links bewegt werden, treiben sie die Kühe einer Gruppe von Tieren, die jeweils auf die Laufgänge 30, 130, 230, 330, 430 getriebenen sind von den jeweiligen ersten Enden 31, 131, 231, 331, 431 auf der rechten Seite in Fig. 1 der jeweiligen Laufgänge zu den jeweiligen zweiten Enden 32, 132, 232, 332, 432 der jeweiligen Laufgänge auf der linken Seite in Fig. 1 und dann in den zweiten Laufgang 40 hinein, wenn die gegebenenfalls vorhandenen Absperrungen oder Tore dort geöffnet sind. Die Viehtreibereinrichtungen 80, 180, 280, 380, 480 gemäß der Erfindung können mit einem Seilzug- oder Schubstangensystem von dem jeweiligen einen Ende 31, 131, 231, 331, 431 des jeweiligen Laufgangs zu dem jeweiligen anderen Ende 32, 132, 232, 332, 432 hin- und herbewegt werden. Gemäß einer weiteren Ausführungsform der Erfindung besitzen die Viehtreibereinrichtungen einen eigenen Antrieb oder sind als Hängebahnsystem ausgeführt. Die Ausführungsformen, die als Mistschieber ausgeführt werden können sind dabei besonders bevorzugt, da auf diese Weise der oder die Laufgänge gereinigt werden können. Wegen der besseren Kraftübertragung auf die Verunreinigungen bei der Reinigung sind die bodengestützten Viehtreibereinrichtungen gegenüber den Hängebahnsystemen bevorzugt.

Die Viehtreibereinrichtung 80 befindet sich in Fig. 1 zum Beispiel gerade auf dem Weg von rechts nach links und treibt alle Kühe der ersten Gruppe, die auf den ersten Laufgang getrieben sind, zu dem zweiten Ende 32 des ersten Laufgangs 30, der dort in den zweiten Laufgang 40 mündet. Sofern das zweite Ende 32 des ersten Laufgangs nicht verschlossen ist, werden alle Kühe der ersten Gruppe in den zweiten Laufgang 40 getrieben. Vorzugsweise kann eine Viehtreibereinrichtung 80, 180, 280, 380, 480 nur dann von dem jeweiligen einen Ende 31, 131, 231, 331, 431 des jeweiligen Laufgangs zu dem jeweiligen anderen Ende 32, 132, 232, 332, 432 hinbewegt werden, wenn das Ende 32, 132, 232, 332, 432 an dem der zweite Laufgang 40 angeordnet ist nicht abgesperrt oder verriegelt ist, so dass Verletzungen der Tiere durch die Viehtreibereinrichtung vermieden werden. Besonders bevorzugt kann nur eine von den Viehtreibereinrichtungen 80, 180, 280, 380, 480 zu einem gegebenen Zeitpunkt von dem jeweiligen rechten Ende zu dem jeweiligen linken Ende der Laufgänge gemäß Fig. 1 bewegt werden.

In dem zweiten Laufgang 40 kann vorzugsweise in dem Bereich des linken Endes 32 des ersten Laufgangs 30 eine Absperrung vorgesehen sein, so dass die erste Gruppe von Kühen unmittelbar in den Vorwartehof 50 getrieben wird. Bei einer besonders bevorzugten Ausführungsform kann die Absperrung, die das zweite Ende 32 des ersten Laufgangs gegenüber dem zweiten Laufgang absperrt, wenn sich die erste Gruppe von Kühen, die dem ersten Liege- und Fressbereich zugeordnet ist, in diesem Liege- und Fressbereich befindet, auch dazu verwendet werden um den zweiten Laufgang 40 so abzusperren, dass die erste Gruppe von Kühen im Wesentlichen unmittelbar in den Vorwartehof 50 getrieben wird. Die Gruppe von Kühen kann aber auch erst vollständig in den zweiten Laufgang 40 getrieben werden und von dort mit einer weiteren Viehtreibereinrichtung 46, die von dem in Fig. 1 oben gezeigten Ende 42 des zweiten Laufgangs 40 über das in Fig. 1 unten gezeigte Ende 44 des zweiten Laufgangs 40 in den Vorwartehof 50, der an dem Ende 44 angeordnet ist, getrieben werden. Die anderen zweiten Enden der weiteren Laufgänge 32, 132, 232, 332, 432 der jeweiligen weiteren Laufgänge auf der linken Seite in Fig. 1 sind dabei vorzugsweise geschlossen, so dass die Tiere einer Gruppe nicht in den Liege- und Fressbereich einer anderen Gruppe eindringen können.

Der Vorwartehof 50 ist in einer bevorzugten Ausführungsform der Erfindung vorgesehen. Der erfindungsgemäße Stall kann aber auch so ausgelegt sein, dass die Kühe, wenn sie zum Melken getrieben werden, von dem zweiten Laufgang unmittelbar in einen Melkraum getrieben werden. Der Vorwartehof und/oder der Melkraum umfassen vorzugsweise die in einem Vorwartehof und Melkraum im Stand der Technik bekannten Viehtreibereinrichtungen. Somit kann ein vollautomatisches Verfahren zum Melken und ein vollautomatischer Stall bereitgestellt werden. Der Melkraum in dem erfindungsgemäßen Stall umfasst außerdem vorzugsweise einen im Stand der Technik bekannten Melkstand, Karussellmelkstand oder Melkroboter. Als Melkstand ist ein Fischgrätenmelkstand, Side-by-Side Melkstand oder Tandemmelkstand bevorzugt. Als Karussellmelkstand kann ein Tandemkarussell, Fischgrätkarussell oder Radialkarussell eingesetzt werden. Bei einer bevorzugten Ausführungsform der Erfindung kann die Einrichtung zum Melken der Kühe jede einzelne Kuh erkennen, die gemolken wird. Ferner umfasst jede Einrichtung zum Melken einen Analysator mit dem die gemolkene Milch jeder einzelnen Kuh analysiert wird, vorzugsweise durch Messung der Leitfähigkeit der Milch. So kann der Gesundheitszustand jeder einzelnen Kuh vorteilhaft überwacht und Krankheiten der Kühe frühzeitig erkannt werden, so dass manche Krankheiten frühzeitig behandelt werden können und eine Ausbreitung davon auf die Gruppe der Kühe oder sogar alle in dem Stall untergebrachten Tiere vermieden werden kann. Ferner kann erkannt werden ob ein Tier trächtig ist. Außerdem kann so eine vorteilhafte Qualitätsanalyse der abgegebenen Milch erfolgen. Nach dem Melken der Kühe in dem Melkraum 60, können die Kühe über den Ausgang 62 in eine Schleuse 64 getrieben werden zur Erkennung jeder einzelnen Kuh. Gegebenenfalls kann durch die Schleuse 64 eine Kuh aus einer Gruppe abgesondert werden, wenn die Analyse der gemolkenen Milch eine Aussonderung der Kuh erforderlich macht, beispielsweise wegen des Gesundheitszustands der Kuh. Besonders vorteilhaft werden die Kühe gemäß den Pfeilen 51, 53, 61 und 63 durch den Vorwartehof, den Melkraum, die Schleuse und wieder zurück in den zweiten Laufgang getrieben.

Die Viehtreibereinrichtungen 46, 80, 180, 280, 380 und 480 in Fig. 1 sind gemäß einer besonders bevorzugten Ausführungsform der Erfindung jeweils als Mistschieber ausgeführt, die jeweils von einem Ende 31, 42, 131, 231, 331, 431 der Laufgänge 30, 40, 130, 230, 330, 430 zu dem jeweiligen anderen Ende 32, 44, 132, 232, 332, 432 der Laufgänge hin- und herbewegt werden können. Dies hat den Vorteil, dass mit Hilfe der Viehtreibereinrichtungen 46, 80, 180, 280, 380 und 480 auch die Laufgänge 30, 40, 130, 230, 330, 430 gereinigt werden können, insbesondere von den Exkrementen der Kühe. Zur Beseitigung von Verunreinigungen werden diese in die an den ersten Enden 31, 42, 131, 231, 331, 431 vorgesehenen Misteinwürfe 82, 182, 282, 382, 482 (bei Laufgang 40 am Ende 42 nicht gezeigt) hinein geschoben, wenn die als Mistschieber ausgestalteten Viehtreibereinrichtungen 80, 180, 280, 380, 480 gemäß der Fig. 1 von links nach rechts bewegt werden bzw. die Viehtreibereinrichtung 46 gemäß der Fig. 1von dem Ende 44 zu dem Ende 42 bewegt wird.

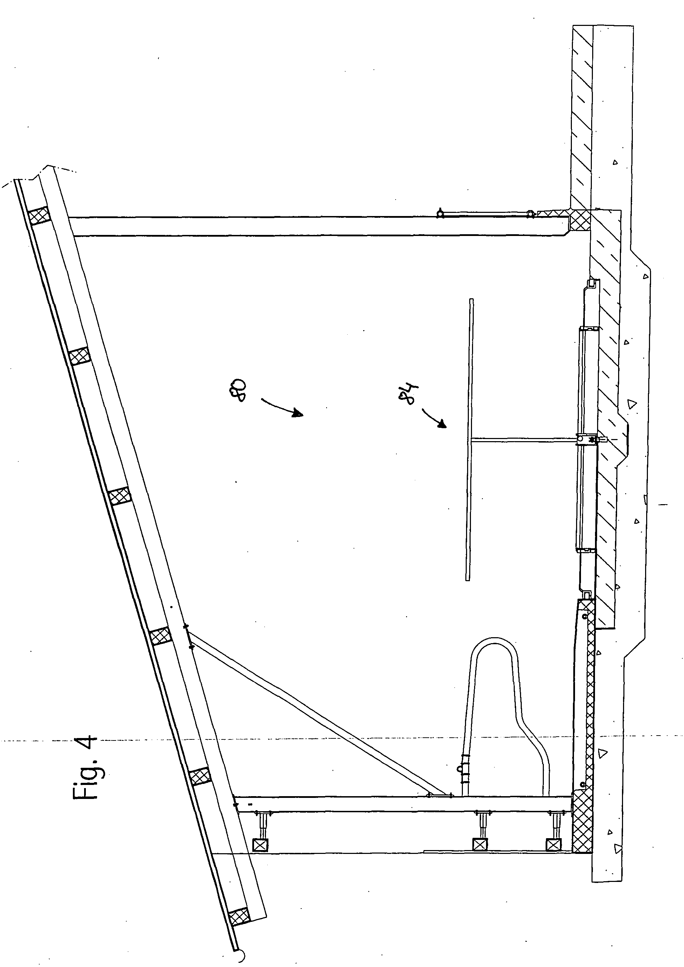

Bei einer besonders vorteilhaften Ausführungsform der Erfindung umfasst eine Viehtreibereinrichtung einen Aufbau 84 auf, wie er in Fig. 4 zu sehen ist. Der Aufbau 84 kann zum Beispiel ein einfaches Rohrgestänge sein und besonders bevorzugt vollständig oder teilweise mit Schwachstrom beaufschlagt werden, um die Kühe von dem ersten Laufgang 30 oder von einem der weiteren Laufgänge 130, 230, 330, 430 in den zweiten Laufgang 40 zu treiben. Die Viehtreibereinrichtung kann dabei während der gesamten Bewegung der Viehtreibereinrichtung von rechts nach links gemäß Fig. 1 oder auch nur in Intervallen während dieser Bewegung mit Strom beaufschlagt werden. Bei einer besonders bevorzugten Ausführungsform der Erfindung weist die Viehtreibereinrichtung 80 und/oder die weiteren Viehtreibereinrichtungen 180, 280, 380, 480 die Reinigungseinrichtung gemäß der vorliegenden Erfindung auf.

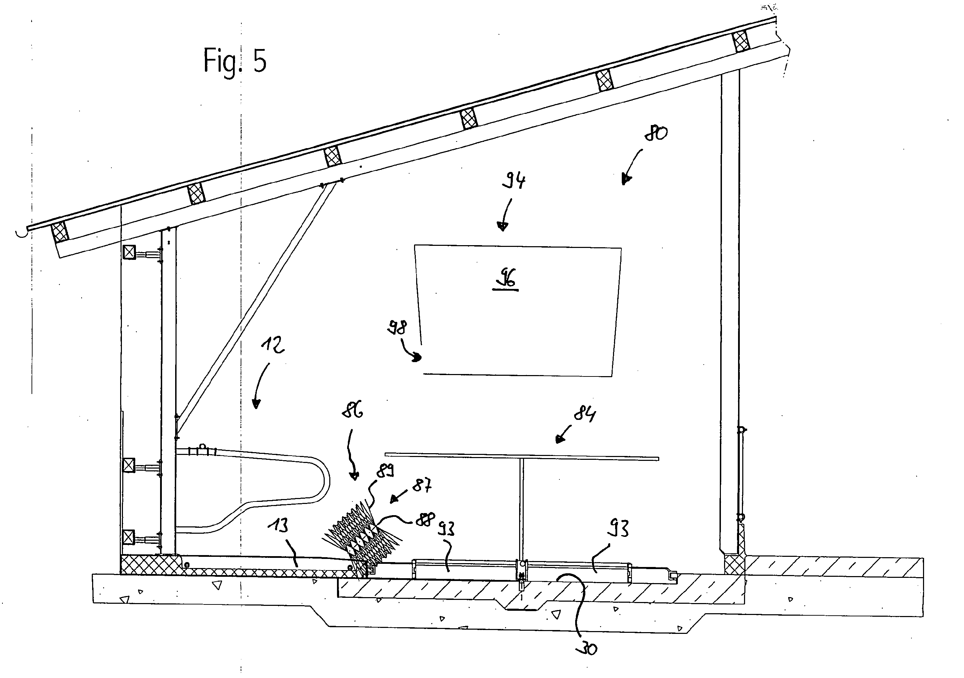

In Fig. 5 ist eine bevorzugte Reinigungseinrichtung 86 gemäß der Erfindung gezeigt. Sie umfasst eine Bürste 87 mit Borsten 89, die vorzugsweise um eine zu dem Laufgang 30 im Wesentlichen parallel angeordnete Achse 88 rotiert werden können. In Fig. 5 ist die Achse 88 gegenüber dem Laufgang 30 zur Veranschaulichung leicht geneigt dargestellt. Die Reinigungseinrichtung 87 kann ferner (nicht gezeigte) Abdeckungsflächen aufweisen, die ein Gehäuse um die Bürste bilden, wobei das Gehäuse eine Öffnung aufweist, die zu dem Laufgang 30 hin gerichtet ist. Somit können durch die rotierende Bürste Verunreinigungen, die sich auf der Liegefläche 13 der Liegebox 12 befinden und beispielsweise Einstreu und Exkremente der Kühe umfassen, zielgerichtet von der Liegebox auf den ersten Laufgang 30 gebürstet werden. Die auf den Laufgang 30 gebürsteten Verunreinigungen können dann mit der vorzugsweise als Mistschieber ausgeführten Viehtreibereinrichtung 80 mit den Schieberarmen 93 von dem linken Ende 32 des ersten Laufgangs 30 zu dem rechten Ende 31 des ersten Laufgangs 30 und dort in den Misteinwurf 82 hineingeschoben werden. Die als Mistschieber ausgeführte Viehtreibereinrichtung 80 ist besonders bevorzugt so ausgeführt, dass die Schieberarme 93 nicht nur feste Verunreinigungen sondern auch Flüssigkeiten vollständig von dem Laufgang 30 in den Misteinwurf 82 hineinschieben können, so dass der Laufgang 30 im Wesentlichen vollständig gereinigt wird. Die gemäß der Erfindung eingesetzte Reinigungseinrichtung hat den Vorteil, dass eine kontinuierliche Reinigung aller nebeneinander angeordneten Liegeboxen erfolgen kann. Dies führt zu einem effizienten und zeitsparenden Verfahren. Außerdem kann die Reinigung so durchgeführt werden, dass die Kühe nicht in ihren Ruhephasen, insbesondere dem Wiederkäuen, gestört werden, da sie sich während der Reinigung nicht in dem Liege- und Fressbereich aufhalten. Dies verbessert die Leistungsfähigkeit der Kühe und erhöht so die Milchproduktion. Außerdem können die Liegeboxen gründlicher gereinigt werden, so dass die Stallhygiene verbessert wird.

Bei einer weiteren Ausführungsform der Erfindung umfasst die Reinigungsein-richtung eine rotierbare Bürste, wobei die Rotationsachse der Bürste gegenüber der Vertikalen zur Liegfläche der Liegebox geneigt ist, und die nebeneinander angeordneten Liegeboxen kontinuierlich durch die an den Liegeboxen vorbei bewegbare Reinigungseinrichtung gereinigt werden können. Bei weiteren vorteilhaften Ausführungsformen der Erfindung, werden die Bürsten der Reinigungseinrichtung in einer Richtung von dem Kopfende der Liegeboxen in Richtung zu dem Ende der Liegeboxen, das dem Laufgang zwischen dem Liege- und Fressbereich angeordnet ist, bewegt.

Bei einer weiteren bevorzugten Ausführungsform der Erfindung weist die Viehtreibereinrichtung 80 bzw. 180, 280, 380 und/oder 480 eine Streueinrichtung zum Eintragen frischer Einstreu in die Liegeboxen auf, wie sie in Fig. 5 als Streueinrichtung 94 dargestellt ist. Diese Streueinrichtung 94 kann zusätzlich zu dem Aufbau 84 vorgesehen sein, wie in Fig. 5 gezeigt, kann aber auch statt dem Aufbau 84 Bestandteil einer Viehtreibereinrichtung sein und gegebenenfalls mit Strom beaufschlagbare Kontakte oder Elemente aufweisen, mit denen Kühe zusätzlich angetrieben werden können. Die Streueinrichtung 94 kann selbst einen Vorrat von Einstreu aufweisen, der mit der Viehtreibereinrichtung mit bewegt wird wie sie in Fig. 5 gezeigt ist oder nur eine Aufbringungsvorrichtung, wie ein Rohr über das von einem nicht mit der Viehtreibereinrichtung mit bewegbaren Vorrat Einstreu auf die Liegeflächen der Liegeboxen, zum Beispiel mit einem Gebläse, aufgebracht werden kann. Die in Fig. 5 gezeigte Streueinrichtung 94 weist den Vorratsbehälter 96 mit einer Öffnung 98 auf. Die Öffnung 98 ist vorzugsweise mit einem Verschluss versehen (nicht gezeigt), der geöffnet werden kann, so dass die Einstreu auf die Liegeboxen herabfallen kann. Bei einer bevorzugten Ausführungsform kann der Vorratsbehälter 96 eine Schnecke oder ein Band zum Transport der Einstreu zu der Öffnung 98 aufweisen. Die entsprechende Menge an Einstreu, die auf die Liegefläche 13 einer Liegebox 12 eingebracht werden soll, kann über die Geschwindigkeit mit der die Streueinrichtung 94 an nebeneinander liegenden Liegeboxen vorbei bewegt wird, die Größe der Öffnung 98 bzw. die durch den Verschluss der Öffnung 98 steuerbare Größe der Öffnung 98 und die Höhe, in der die Öffnung 98 über der Liegefläche vorgesehen ist, eingestellt werden. Bei einer weiteren Ausführungsform wird Einstreu auf die Liegefläche 13 geblasen.

Der in Fig. 1 gezeigte und oben beschriebene erfindungsgemäße Stall kann dazu eingerichtet sein, dass darin das erfindungsgemäße Verfahren zur Reinigung von nebeneinander angeordneten und an einen Laufgang angrenzenden Liegeboxen für Kühe durchgeführt wird, wobei eine Reinigungseinrichtung gemäß einem der Ansprüche 1 bis 6 an den nebeneinander angeordneten Liegeboxen vorbei bewegt wird.

Die Reinigungseinrichtung der Erfindung ist nämlich zum Reinigen von nebeneinander angeordneten und an einen Laufgang 30, 130, 230, 330, 430 angrenzenden Liegeboxen 12, 112, 212, 312, 412 für Kühe eingerichtet, wobei die Reinigungseinrichtung an den nebeneinander angeordneten Liegeboxen vorbei bewegbar ist und mindestens eine die Liegeflächen 13 der Liegeboxen reinigende Bürste 87 umfasst.

Bei der erfindungsgemäßen Reinigungseinrichtung ist die Bürste 87 vorzugsweise rotierbar und ihre Rotationsachse 88 kann gegenüber der Vertikalen zur Liegefläche 13 der Liegebox geneigt sein, so dass nebeneinander angeordnete Liegeboxen kontinuierlich durch die an den Liegeboxen vorbei bewegbare Reinigungseinrichtung gereinigt werden können.

Bei einer weiteren Ausführungsform ist die Bürste 87 rotierbar und ihre Rotationsachse 88 ist im Wesentlichen parallel zu dem Laufgang 30, 130, 230, 330, 430, an den die Liegeboxen angrenzen, angeordnet.

Besonders bevorzugt ist die Bürste 87 in jeder Liegebox in der Richtung von dem Kopfende 16 einer Liegebox 12 zu dem Ende 18, das dem Laufgang 30, 130, 230, 330, 430 zugewandt ist, bewegbar.

Besonders vorteilhaft ist die Reinigungseinrichtung der Erfindung an einer Viehtreibeinrichtung 80, 180, 280, 380 und/oder 480 befestigt, die von einem ersten Ende 31, 131, 231, 331, 431 des jeweiligen Laufgangs zu einem zweiten Ende 32, 132, 232, 332, 432 des Laufgangs, an dem der Laufgang 30, 130, 230, 330, 430 in einen zweiten Laufgang 40 mündet, vor- und wieder zurückbewegbar.

Ganz besonders vorteilhaft ist eine Reinigungseinrichtung, die an einem Mistschieber befestigt ist, der in einem Laufgang vor- und zurückbewegbar ist.

Mit der erfindungsgemäßen Reinigungseinrichtung kann besonders vorteilhaft ein Reinigen der Liegeboxen in dem Drittel der einzelnen Liegeboxen durchgeführt werden, das dem Laufgang zugewandt ist.

Gemäß einer weiteren Ausführungsform der Erfindung schließt das Verfahren zur Reinigung von Liegeboxen ein, dass nach dem Reinigen der Liegeboxen frische Einstreu, die vorzugsweise Strohhäcksel oder Sägemehl umfasst, auf die einzelnen Liegeboxen aufgebracht wird, vorzugsweise auf das Drittel der einzelnen Liegeboxen, das dem Laufgang zugewandt ist.

Ganz besonders bevorzugt ist ein Verfahren zur Reinigung von Liegeboxen das auch ein Melken von Kühen nach den folgenden Schritten umfasst:
(a) ein Zusammentreiben mindestens einer ersten Gruppe von Kühen, die sich in einem der ersten Gruppe zugeordneten Liege- und Fressbereich 10, 20 eines Stalls aufhalten, wobei der Liegebereich 10 die Liegeboxen 12 umfasst, über einen ersten Laufgang 30, der zwischen dem Liege- und Fressbereich angeordnet ist, auf einen zweiten Laufgang 40, durch eine Viehtreibereinrichtung 80, die von einem ersten Ende 31 des ersten Laufgangs zu einem zweiten Ende 32 des ersten Laufgangs bewegt wird, an dem der erste Laufgang in den zweiten Laufgang 40 mündet,
(b) ein Hineintreiben der Gruppe von Kühen von dem zweiten Laufgang, gegebenenfalls über einen Vorwartehof 50, in einen Melkraum 60, in dem die Kühe gemolken werden;
(c) das Reinigen der Liegeboxen des der ersten Gruppe zugeordneten Liegebereichs gemäß einem der oben beschriebenen Verfahren, und
(d) ein Zurücktreiben der gemolkenen Kühe in den der ersten Gruppe zugeordneten Liege- und Fressbereich 10, 20.

Eine weitere Ausführungsform umfasst folgende Schritte:
(a') ein Zusammentreiben einer weiteren Gruppe von Kühen, die sich in einem der weiteren Gruppe zugeordneten weiteren Liege- und Fressbereich 110, 120; 210, 220; 310, 320; 410, 420 des Stalls aufhalten, über einen weiteren Laufgang 130, 230, 330, 430, der zwischen dem weiteren Liege- und Fressbereich angeordnet ist, auf den zweiten Laufgang 40, durch eine weitere Viehtreibereinrichtung 180, 280, 380, 480, die von einem ersten Ende 131, 231, 331, 431 des weiteren Laufgangs zu einem zweiten Ende 132, 232, 332, 432 des weiteren Laufgangs bewegt wird, an dem der weitere Laufgang in den zweiten Laufgang 40 mündet,
(b') ein Hineintreiben der weiteren Gruppe von Kühen von dem zweiten Laufgang, gegebenenfalls über einen Vorwartehof 50, in einen Melkraum 60, in dem die Kühe gemolken werden;
(c') ein Reinigen der Liegeboxen des der weiteren Gruppe zugeordneten Liegebereichs 110, 210, 310, 410 gemäß einem der Verfahren wie es oben beschrieben ist, und
(d') ein Zurücktreiben der gemolkenen Kühe in den der weiteren Gruppe zugeordneten Liege- und Fressbereich,
vorzugsweise mit der Maßgabe, dass die Schritte (a') bis (d') für die weitere Gruppe von Kühen nach den Schritten (a) bis (d) durchgeführt werden.

Insbesondere kann in dem Stall gemäß Fig 1 folgendes Verfahren ausgeführt werden.
- Eine erste Gruppe von Kühen, die sich in dem der ersten Gruppe zugeordneten Liege- und Fressbereich 10 und 20 des Stalls aufhält, kann auf den ersten Laufgang 30, der zwischen dem Liege- und Fressbereich 10 und 20 angeordnet ist, zusammengetrieben werden, wobei der Liegebereich 10 nebeneinander liegende Liegeboxen 12 umfasst.
- Ferner kann die auf den ersten Laufgang 30 zusammengetriebene erste Gruppe von Kühen in den zweiten Laufgang 40, der sich an dem Ende 32 des ersten Laufgangs 30 befindet, getrieben werden.
- Weiterhin kann die Gruppe von Kühen von dem zweiten Laufgang 40 über den Vorwartehof 50 in den Melkraum 60, in dem die Kühe gemolken werden, getrieben werden.
- Außerdem können die gemolkenen Kühe in den der ersten Gruppe zugeordneten Liege- und Fressbereich 10 und 20 zurückgetrieben werden.

Durch dieses Verfahren wird gewährleistet, dass alle Kühe, die in einer Gruppe zusammengefasst und einem Liege- und Fressbereich zugeordnet sind, zwangsweise gemolken werden. Auf diese Weise werden zusätzliche Überwachungstätigkeiten und ein Aussondern und Melken einzelner Tiere, die sich ungern oder gar nicht von einem in einem Stall aufgestellten frei zugänglichen Melkroboter melken lassen, vermieden. Somit kann einerseits der Arbeits- und Zeitaufwand für das Bedienungspersonal verringert und andererseits die Milchproduktion gesteigert werden. Denn mit dem erfindungsgemäßen Verfahren kann bei einer bevorzugten Ausführungsform erreicht werden, dass alle einer Gruppe zugeordneten Kühe, mindestens dreimal pro Tag gemolken werden.

Bei einer bevorzugten Ausführungsform der Erfindung umfasst das Verfahren, insbesondere das Melkverfahren, außerdem:
- ein Zusammentreiben einer zweiten Gruppe von Kühen, die sich in einem der zweiten Gruppe zugeordneten Liege- und Fressbereich 110 und 120 des Stalls aufhalten, auf einen weiteren Laufgang 130, der zwischen dem weiteren Liege- und Fressbereich 110 und 120 angeordnet ist, wobei der weitere Liegebereich 110 nebeneinander liegende Liegeboxen 112 umfasst;
- ein Treiben der in Schritt (a') auf den weiteren Laufgang 130 zusammengetriebenen zweiten Gruppe von Kühen in den zweiten Laufgang 40, der sich an dem Ende 132 des weiteren Laufgangs 130 befindet;
- ein Hineintreiben der zweiten Gruppe von Kühen von dem zweiten Laufgang 40, über den Vorwartehof 50, in den Melkraum 60, in dem die Kühe gemolken werden; und
- ein Zurücktreiben der gemolkenen Kühe in den der zweiten Gruppe zugeordneten Liege- und Fressbereich 110 und 120.

Besonders bevorzugt werden die Schritte (a') bis (d') für die zweite Gruppe von Kühen erst dann durchgeführt, nachdem die entsprechenden Schritte für die erste Gruppe vollständig durchgeführt wurden, d.h. dass sich die erste Gruppe nach dem Melken wieder in ihrem Liege- und Fressbereich 110 und 120 befindet, bevor die zweite Gruppe von Kühen im Schritt (a') auf den Laufgang 130 getrieben wird. Bei einer anderen Ausführungsform, kann die zweite Gruppe zum Beispiel auf den Laufgang 130 oder in den Vorwartehof 50 getrieben werden, bevor die erste Gruppe nach dem Melken wieder zurück in den ihr zugeordneten Liege- und Fressbereich 10, 20 getrieben wird.

Bei einer weiteren Ausführungsform können zum Beispiel die folgenden Schritte durchgeführt werden. Inbesondere können bei dem Melkverfahren die vier Schritte des vorgenannten Verfahrens mit mehreren weiteren Gruppen von Kühen durchgeführt werden, vorzugsweise der Art, dass die genannten Schritte für jede weitere Gruppe von Kühen nach den vier Schritten für die vorhergehende Gruppe durchgeführt werden. So können zum Beispiel die folgenden Schritte durchgeführt werden:
- Eine dritte Gruppe von Kühen, die sich in dem der dritten Gruppe zugeordneten Liege- und Fressbereich 210 und 220 des Stalls aufhalten, kann auf den weiteren Laufgang 230, der zwischen dem weiteren Liege- und Fressbereich 210 und 220 angeordnet ist, getrieben werden, wobei der weitere Liegebereich 210 nebeneinander liegende Liegeboxen 212 umfasst.
- Die auf den weiteren Laufgang 230 zusammengetriebene dritte Gruppe von Kühen kann in den zweiten Laufgang 40, der sich an dem Ende 232 des weiteren Laufgangs 230 befindet, getrieben werden.
- Die dritte Gruppe von Kühen kann von dem zweiten Laufgang 40, über den Vorwartehof 50, in den Melkraum 60, in dem die Kühe gemolken werden, getrieben werden.
- Und die gemolkenen Kühe der dritten Gruppe können in den der dritten Gruppe zugeordneten Liege- und Fressbereich 210 und 220 zurückgetrieben werden.

Diese Schritte werden vorzugsweise durchgeführt, nachdem für die zweite Gruppe von Kühen die entsprechenden Schritte durchgeführt wurden. Ferner können diese Schritte auch für eine vierte und/oder fünfte oder noch weitere Gruppe von Kühen durchgeführt werden. So können zum Beispiel die folgenden Schritte durchgeführt werden:
- Eine vierte Gruppe von Kühen, die sich in dem der vierten Gruppe zugeordneten Liege- und Fressbereich 310 und 320 des Stalls aufhalten, kann auf den weiteren Laufgang 330, der zwischen dem weiteren Liege- und Fressbereich 310 und 320 angeordnet ist, getrieben werden, wobei der weitere Liegebereich 310 nebeneinander liegende Liegeboxen 312 umfasst.
- Die auf den weiteren Laufgang 330 zusammengetriebene vierte Gruppe von Kühen kann in den zweiten Laufgang 40, der sich an dem Ende 332 des weiteren Laufgangs 330 befindet, getrieben werden.
- Die vierte Gruppe von Kühen kann von dem zweiten Laufgang 40, über den Vorwartehof 50, in den Melkraum 60, in dem die Kühe gemolken werden, getrieben werden.
- Und die gemolkenen Kühe der vierten Gruppe können in den der vierten Gruppe zugeordneten Liege- und Fressbereich 310 und 320 zurückgetrieben werden.
- Eine fünfte Gruppe von Kühen, die sich in dem der fünften Gruppe zugeordneten Liege- und Fressbereich 410 und 420 des Stalls aufhalten, kann auf den weiteren Laufgang 430, der zwischen dem weiteren Liege- und Fressbereich 410 und 420 angeordnet ist, getrieben werden, wobei der weitere Liegebereich 410 nebeneinander liegende Liegeboxen 412 umfasst.
- Die auf den weiteren Laufgang 430 zusammengetriebene vierte Gruppe von Kühen kann in den zweiten Laufgang 40, der sich an dem Ende 432 des weiteren Laufgangs 430 befindet, getrieben werden.
- Die fünfte Gruppe von Kühen kann von dem zweiten Laufgang 40, über den Vorwartehof 50, in den Melkraum 60, in dem die Kühe gemolken werden, getrieben werden.
- Und die gemolkenen Kühe der fünften Gruppe können in den der fünften Gruppe zugeordneten Liege- und Fressbereich 410 und 420 zurückgetrieben werden.

Bei weiteren vorteilhaften Ausführungsformen der vorliegenden Erfindung (des Reinigungsverfahrens oder des Melkverfahrens) erfolgt das Zusammentreiben in Schritt (a) durch Betätigung einer ersten Treib- und Absperrvorrichtung 70 zum Heraustreiben von Kühen aus ihrem Liegebereich 10 in den ersten Laufgang 30 und zum Absperren des Liegebereichs 10, und gegebenenfalls kann durch Betätigung einer zweiten Treib- und Absperrvorrichtung (nicht gezeigt) ein Heraustreiben von Kühen aus ihrem Fressbereich 20 in den ersten Laufgang 30 und zum Absperren des Fressbereichs 20 erfolgen.

Ferner kann das Zusammentreiben in Schritt (a') durch Betätigung einer weiteren ersten Treib- und Absperrvorrichtung zum Heraustreiben von Kühen aus ihrem Liegebereich 110, 210, 310, 410 in den entsprechenden weiteren Laufgang 130, 230, 330, 430 und zum Absperren des Liegebereichs 110, 210, 310, 410 erfolgen, und gegebenenfalls kann durch Betätigung einer weiteren zweiten Treib- und Absperrvorrichtung (nicht gezeigt) zum Heraustreiben von Kühen aus ihrem Fressbereich 120, 220, 320, 420 in den entsprechenden weiteren Laufgang 130, 230, 330, 430 Laufgang und zum Absperren des Fressbereichs 120, 220, 320, 420 erfolgen.

Vorzugsweise werden durch Betätigung der ersten oder gegebenenfalls der weiteren ersten Treib- und Absperrvorrichtung(en) zum Heraustreiben von Kühen aus ihrem Liegebereich jeweils alle Kühe einer Gruppe, die sich in dem ihrer Gruppe zugeordneten Liegebereich aufhalten, aus diesem Liegebereich gleichzeitig in den ersten oder gegebenenfalls weiteren Laufgang getrieben, und die erste oder gegebenenfalls die weitere(n) erste(n) Treib- und Absperrvorrichtung(en) kann oder können so ausgebildet sein, dass der für die jeweilige Gruppe zugeordnete Liegebereich für alle Kühe dieser Gruppe unzugänglich abgesperrt wird. Dazu ist zum Beispiel für jede Liegebox, die in Fig. 2 gezeigte Treib- und Absperrvorrichtung 70 vorgesehen, und alle solchen Treib- und Absperrvorrichtungen, die in einem einer Gruppe von Kühen zugeordneten Liegebereich vorgesehen sind, werden dann gleichzeitig betätigt, so dass alle Kühe einer Gruppe auf den Laufgang getrieben werden, der zwischen dem dieser Gruppe zugeordneten Liege- und Fressbereich angeordnet ist. Dieses Verfahren kann noch verbessert werden durch Betätigung der zweiten und gegebenenfalls der weiteren zweiten Treib- und Absperrvorrichtung(en) zum Heraustreiben von Kühen aus ihrem Fressbereich in den ersten oder weiteren Laufgang zwischen Liege- und Fressbereich und zum Absperren ihres Fressbereichs, so dass alle Kühe einer Gruppe, die sich in dem ihrer Gruppe zugeordneten Fressbereich aufhalten, aus diesem Fressbereich gleichzeitig in den ersten oder gegebenenfalls weiteren Laufgang getrieben werden.

Das Treiben der ersten Gruppe von Kühen in den zweiten Laufgang 40 kann durch Betätigung der Viehtreibereinrichtung 80 erfolgen, die von dem Ende 31 des ersten Laufgangs 30 zu einem Ende 32 des ersten Laufgangs 30, an dem der zweite Laufgang 40 angeordnet ist, hinbewegt wird.

Ferner erfolgt das Treiben einer weiteren Gruppe von Kühen Schritt (a') des Reinigungsverfahrens oder in Schritt (b') des Melkverfahrens in den zweiten Laufgang 40 vorzugsweise durch Betätigung einer weiteren Viehtreibereinrichtung 180, 280, 380, 480, die von einem ersten Ende 131, 231, 331, 431 des weiteren Laufgangs 130, 230, 330 oder 430 zu dem Ende 132, 232, 332, 432 des weiteren Laufgangs 130, 230, 330, 430, an dem der zweite Laufgang angeordnet ist, hinbewegt wird.

Weiterhin ist bevorzugt, dass die Viehtreibereinrichtung 80 oder die weitere Viehtreibereinrichtung 180, 280, 380, 480 als Mistschieber ausgeführt ist, so dass mit der Viehtreibereinrichtung 80 oder der weiteren Viehtreibereinrichtung 180, 280, 380, 480 Mist oder andere Verunreinigungen, einschließlich von Flüssigkeiten, in dem jeweiligen Laufgang 30, 130, 230, 330, 430 geräumt werden können.

Gemäß eines bevorzugten Verfahrens der Erfindung wird ein akustisches Signal, vorzugsweise ein Klingel- oder Hornsignal, und/oder optisches vor der Betätigung der ersten und/oder zweiten sowie gegebenenfalls der weiteren ersten und/oder weiteren zweiten Treib- und Absperrvorrichtung, der Viehtreibereinrichtung sowie gegebenenfalls der weiteren Viehtreibereinrichtung und/oder vor dem Hineintreiben einer Gruppe von Kühen von dem zweiten Laufgang, gegebenenfalls über den Vorwartehof, in den Melkraum gegeben.

Vorzugsweise wird vor dem Treiben einer Gruppe von Kühen in den zweiten Laufgang eine Absperrung zwischen dem ersten Laufgang 30 und dem zweiten Laufgang 40 oder zwischen dem weiteren Laufgang 130, 230, 330, 430 und dem zweiten Laufgang 40 geöffnet.

Außerdem kann nach oder während dem Treiben einer Gruppe von Kühen, gegebenenfalls über den Vorwartehof 50, in den Melkraum 60, die Absperrung zwischen dem ersten Laufgang 30 und dem zweiten Laufgang 40 oder zwischen dem weiteren Laufgang 130, 230, 330, 430 und dem zweiten Laufgang 40 geschlossen werden. Damit wird auf einfache Art und Weise ein Eindringen von Kühen in den Liege- und Fressbereich einer anderen Gruppe vermieden, wenn die oben beschriebenen Schritte (a') bis (d') für die weitere Gruppe von Kühen nicht erst nach den Schritten (a) bis (d) für die erste Gruppe durchgeführt werden bzw. wenn die Schritte (a') bis (d') für jede weitere Gruppe von Kühen nicht erst nach den Schritten (a') bis (d') für die vorhergehende Gruppe durchgeführt werden.

In dem Melkraum 60 können die Kühe unter Erkennung jeder einzelnen Kuh gemolken werden, so dass die gemolkene Milch jeder einzelnen Kuh analysiert werden kann, vorzugsweise durch Messung der Leitfähigkeit der Milch. Somit kann durch ein Vorbeitreiben der gemolkenen Kühen an einer Schleuse unter Erkennung der einzelnen Kühe gegebenenfalls eine Absonderung einer Kuh aus ihrer Gruppe erfolgen, wenn die gemolkene Milch dieser Kuh auffällig ist. Nach der Aussonderung kann die Kuh eingehender untersucht und gegebenenfalls behandelt werden. Die abgesonderten Kühe können vorteilhaft vor und während einer Untersuchung und gegebenenfalls einer Behandlung in den abgetrennten Liege- und Fressbereichen 67 untergebracht werden. Dies hat den Vorteil, dass die Milchproduktion der gesunden Tiere in den ihnen zugeordneten Liege- und Fressbereichen nicht gestört wird.

In einer bevorzugten Ausführungsform der Erfindung werden die Liegeboxen einer Gruppe von Kühen vor dem Zurücktreiben der gemolkenen Kühe in den der jeweiligen Gruppe zugeordneten Liege- und Fressbereich gereinigt. Besonders bevorzugt wird bei der Reinigung der Liegeboxen mit der Liegebox begonnen, die an dem Ende 32, 132, 232, 332, 432 des ersten oder weiteren Laufgangs 30, 130, 230, 330, 430 angeordnet ist, das in den zweiten Laufgang 40 mündet. Dies geschieht vorteilhafter Weise unter Einsatz der Viehtreibereinrichtung 80, 180, 280, 380, 480, welche die oben beschriebene Reinigungseinrichtung umfasst.

Damit können die Liegeboxen kontinuierlich und äußerst zeitsparend gereinigt werden. Außerdem werden die Kühe dadurch nicht in ihren Ruhephasen beim Wiederkäuen gestört, da die Reinigung erfolgt, während die Kühe auf dem Weg zum oder beim Melken oder auf dem Weg zurück sind. Somit kann in dem erfindungsgemäßen Stall durch das erfindungsgemäße Verfahren zum Reinigen der Liegeboxen oder durch das erfindungsgemäße Melkverfahren ein sehr hoher Hygienestandard unter Steigerung der Milchproduktion erzielt werden. Vorzugsweise wird die Absperrung zwischen dem Laufgang 30, 130, 230, 330, 430, der gereinigt werden soll, und dem zweiten Laufgang 40 geschlossen, bevor mit der Reinigung begonnen wird.

Besonders bevorzugt wird das Reinigen der Liegeboxen in dem Drittel der einzelnen Liegeboxen durchgeführt, das dem ersten oder weiteren Laufgang 30 oder 130, 230, 330, 430 zugewandt ist. So kann die Reinigung effizienter und schneller durchgeführt werden.

Besonders bevorzugt wird nach dem Reinigen der Liegeboxen frische Einstreu, die vorzugsweise Strohhäcksel oder Sägemehl umfasst, auf die Liegeboxen aufgebracht, vorzugsweise auf das Drittel der einzelnen Liegeboxen, das dem ersten 30 oder weiteren Laufgang 130, 230, 330, 430 zugewandt ist.

Bei einer besonders bevorzugten Ausführungsform der Erfindung umfasst der Stall eine zentrale Steuereinrichtung mit der gegebenenfalls alle Verfahren, die oben beschrieben sind automatisch gesteuert werden. Besonders bevorzugt wird, vor einem Heraustreiben einer Gruppe von Tieren aus ihrem Liegebereich zunächst das Futter aus dem Futtertisch automatisch entfernt, vorzugsweise mit einem Förderband mit dem ein bevorzugter Futtertisch ausgestattet ist. Gegebenenfalls kann dann eine Treib- und Absperrvorrichtung betätigt werden, um alle Tiere dieser Gruppe zwangsweise aus dem Fressbereich heraus zu treiben. Danach wird das Selbstfang- oder Fressgitter in dem Fressbereich automatisch gesperrt, so dass kein Tier mehr Zugang zu dem Futtertisch des Fressbereichs hat. Anschließend erst werden, ebenfalls automatisch gesteuert, die Tiere, die sich in den Liegeboxen befinden von diesen heraus auf den Laufgang zwischen Liege- und Fressbereich getrieben. Dann wird automatisch die Absperrung zwischen diesem Laufgang und dem zweiten Laufgang, sowie gegebenenfalls die Tür oder Absperrung des Eingangs zum Vorwartehof und/oder Melkraum geöffnet. Dann wird die Viehtreibereinrichtung in dem Laufgang zwischen Liege- und Fressbereich betätigt, um die Tiere von dem Laufgang über den zweiten Laufgang und gegebenenfalls über den Vorwartehof in den Melkraum zu treiben. Wenn das letzte Tier dieser Gruppe den Vorwartehof betreten hat, wird der Eingang vorzugsweise automatisch geschlossen und verriegelt. Nach einem Melken und gegebenfalls einem Aussondern eines oder mehrerer Tiere werden die gemolkenen Tiere wieder in den Liege- und Fressbereich zurückgetrieben, vorzugsweise über einen Tränkenraum. Der Liege- und Fressbereich wird besonders bevorzugt davor gereinigt. Besonders bevorzugt wird mit der Reinigung gegebenenfalls mit einem Einstreuen der Liegeboxen, wie oben beschrieben, begonnen, wenn das letzte Tier der Gruppe vor dem Melken den Liege- und Fressbereich verlassen hat. So können die ersten Tiere, die von dem Melken zurückkehren wieder ihre angestammten Liege- und Fressplätze belegen, während gegebenenfalls noch ein Teil der Liegeboxen gereinigt wird. Bei einer besonders bevorzugten Ausführungsform der Erfindung, sind die Treib- und Absperrvorrichtungen zum Heraustreiben der Kühe aus ihrem Liegebereich noch betätigt, wenn die Tiere nach dem Melken dorthin zurückkehren, während die Selbstfang- und Fressgitter wieder geöffnet sind. Vorzugsweise ist zu diesem Zeitpunkt auch wieder frisches Futter, ebenfalls automatisch, in den Fressbereich, vorzugsweise über ein Hängebahnsystem befördert worden. Ferner wird bei einem besonders bevorzugten Verfahren, das Selbstfang- oder Fressgitter an den einzelnen Fressplätzen gesperrt, wenn ein Tier dort frisst. Damit werden die Tiere zwangsweise für einen vorgegebenen Zeitraum unmittelbar nach dem Melken und vorzugsweise nach der Wasseraufnahme zum Fressen gebracht, wobei nach einer vorgegebenen Zeit, dass Selbstfang- oder Fressgitter wieder geöffnet wird, so dass die Tiere dann wieder ausruhen und wiederkäuen können. Vor dem nächsten Melkvorgang dieser Gruppe, der wieder mit einem Entfernen des Futters beginnt, können sich die Tiere frei zwischen Liege- und Fressbereich, der vorzugsweise auch mit Tränken ausgestattet ist, bewegen. Besonders bevorzugt wird nachdem das letzte Tier nach dem Melken wieder in den Liege- und Fressbereich zurückgekehrt ist, die Absperrung zwischen dem Laufgang zwischen Liege- und Fressbereich und dem zweiten Laufgang geschlossen. Besonders bevorzugt wird das gleiche Verfahren automatisch für die nächste Gruppe ebenfalls von der zentralen Steuereinrichtung gesteuert betrieben. Besonders bevorzugt wird das entsprechende Verfahren für die nächste Gruppe von Tieren zeitlich so gesteuert, dass die Tiere gerade dann aus dem Laufgang zwischen ihrem Liege- und Fressbereich in den zweiten Laufgang getrieben werden, wenn die Absperrung zwischen dem Laufgang der vorigen Gruppe und dem zweiten Laufgang, ebenfalls automatisch, wieder abgesperrt wurde.

Die Beschreibung und Ansprüche der Voranmeldungen DE 10 2004 016 720 und DE 10 2004 016 721 werden hiermit in ihrer Gesamtheit in die vorliegende Patentanmeldung eingefügt.

## Patentansprüche

1. Reinigungseinrichtung zum Reinigen von nebeneinander angeordneten und an einen Laufgang (30, 130, 230, 330, 430) angrenzenden Liegeboxen (12, 112, 212, 312, 412) für Kühe, wobei die Reinigungseinrichtung an den nebeneinander angeordneten Liegeboxen vorbei bewegbar ist und mindestens eine die Liegeflächen (13) der Liegeboxen reinigende Bürste (87) umfasst.

2. Reinigungseinrichtung nach Anspruch 1, **dadurch gekennzeichnet, dass** die Bürste rotierbar ist und ihre Rotationsachse (88) gegenüber der Vertikalen zur Liegefläche (13) der Liegebox geneigt ist, und die nebeneinander angeordneten Liegeboxen kontinuierlich durch die an den Liegeboxen vorbei bewegbare Reinigungseinrichtung gereinigt werden können.

3. Reinigungseinrichtung nach Anspruch 1, **dadurch gekennzeichnet, dass** die Bürste (87) rotierbar ist und ihre Rotationsachse (88) im Wesentlichen parallel zu dem Laufgang (30, 130, 230, 330, 430) verläuft, an den die Liegeboxen angrenzen.

4. Reinigungseinrichtung nach einem der vorstehenden Ansprüche, **dadurch gekennzeichnet, dass** die Bürste (87) in jeder Liegebox in der Richtung von dem Kopfende der Liegebox zu dem Ende der Liegebox, das dem Laufgang (30, 130, 230, 330, 430) zugewandt ist, bewegt werden kann.

5. Reinigungseinrichtung nach einem der vorstehenden Ansprüche, **dadurch gekennzeichnet, dass** sie an einer Viehtreibeinrichtung (80, 180, 280, 380, 480) befestigt ist, die von einem ersten Ende (31, 131, 231, 331, 431) des Laufgangs zu einem zweiten Ende (32, 132, 232, 332, 432) des Laufgangs, an dem der Laufgang (30, 130, 230, 330, 430) in einen zweiten Laufgang (40) mündet, vor- und wieder zurückbewegbar ist.

6. Reinigungseinrichtung nach einem der vorstehenden Ansprüche, **dadurch gekennzeichnet, dass** sie an einem Mistschieber befestigt ist, der in dem Laufgang vor- und zurückbewegbar ist.

7. Verfahren zur Reinigung von nebeneinander angeordneten und an einen Laufgang angrenzenden Liegeboxen für Kühe, wobei eine Reinigungseinrichtung gemäß einem der Ansprüche 1 bis 6 an den nebeneinander angeordneten Liegeboxen vorbei bewegt wird.

8. Verfahren nach Anspruch 7, **dadurch gekennzeichnet, dass** das Reinigen der Liegeboxen in dem Drittel der einzelnen Liegeboxen durchgeführt wird, das dem Laufgang zugewandt ist.

9. Verfahren nach einem der vorstehenden Ansprüche, **dadurch gekennzeichnet, dass** nach dem Reinigen der Liegeboxen frische Einstreu, die vorzugsweise Strohhäcksel oder Sägemehl umfasst, auf die einzelnen Liegeboxen aufgebracht wird, vorzugsweise auf das Drittel der einzelnen Liegeboxen, das dem Laufgang zugewandt ist.

10. Verfahren nach einem der vorstehenden Ansprüche, **dadurch gekennzeichnet, dass** es ein Melken der Kühe nach den folgenden Schritten umfasst:
(a) ein Zusammentreiben mindestens einer ersten Gruppe von Kühen, die sich in einem der ersten Gruppe zugeordneten Liege- und Fressbereich (10, 20) eines Stalls aufhalten, wobei der Liegebereich (10) die Liegeboxen (12) umfasst, über einen ersten Laufgang (30), der zwischen dem Liege- und Fressbereich angeordnet ist, auf einen zweiten Laufgang (40), durch eine Viehtreibereinrichtung (80), die von einem ersten Ende (31) des ersten Laufgangs zu einem zweiten Ende (32) des ersten Laufgangs bewegt wird, an dem der erste Laufgang in den zweiten Laufgang (40) mündet,
(b) ein Hineintreiben der Gruppe von Kühen von dem zweiten Laufgang, gegebenenfalls über einen Vorwartehof (50), in einen Melkraum (60), in dem die Kühe gemolken werden;
(c) das Reinigen der Liegeboxen des der ersten Gruppe zugeordneten Liegebereichs gemäß einem der vorstehenden Verfahren, und
(d) ein Zurücktreiben der gemolkenen Kühe in den der ersten Gruppe zugeordneten Liege- und Fressbereich (10, 20).

11. Verfahren nach Anspruch 10, **gekennzeichnet durch** folgende Schritte:
(a') ein Zusammentreiben einer weiteren Gruppe von Kühen, die sich in einem der weiteren Gruppe zugeordneten weiteren Liege- und Fressbereich (110, 120; 210, 220; 310, 320; 410, 420) des Stalls aufhalten, über einen weiteren Laufgang (130, 230, 330, 430), der zwischen dem weiteren Liege- und Fressbereich angeordnet ist, auf den zweiten Laufgang (40), **durch** eine weitere Viehtreibereinrichtung (180, 280, 380, 480), die von einem ersten Ende (131, 231, 331, 431) des weiteren Laufgangs zu einem zweiten Ende (132, 232, 332, 432) des weiteren Laufgangs bewegt wird, an dem der weitere Laufgang in den zweiten Laufgang (40) mündet,
(b') ein Hineintreiben der weiteren Gruppe von Kühen von dem zweiten Laufgang, gegebenenfalls über einen Vorwartehof (50), in einen Melkraum (60), in dem die Kühe gemolken werden;
(c') ein Reinigen der Liegeboxen des der weiteren Gruppe zugeordneten Liegebereichs (110, 210, 310, 410) gemäß einem der Verfahren wie es in einem der Ansprüche 7 bis 9 definiert ist, und
(d') ein Zurücktreiben der gemolkenen Kühe in den der weiteren Gruppe zugeordneten Liege- und Fressbereich,
vorzugsweise mit der Maßgabe, dass die Schritte (a') bis (d') für die weitere Gruppe von Kühen nach den Schritten (a) bis (d) durchgeführt werden.

12. Verfahren nach Anspruch 11, **dadurch gekennzeichnet, dass** die Schritte (a') bis (d') mit mehreren weiteren Gruppen von Kühen durchgeführt werden, vorzugsweise der Art, dass die Schritte (a') bis (d') für jede weitere Gruppe von Kühen nach den Schritten (a') bis (d') für die vorhergehende Gruppe durchgeführt werden.

13. Verfahren nach einem der vorstehenden Ansprüche, **dadurch gekennzeichnet, dass** durch Betätigung einer ersten (70) oder gegebenenfalls einer weiteren ersten Treib-und Absperrvorrichtung zum Heraustreiben von Kühen aus ihrem Liegebereich jeweils alle Kühe einer Gruppe, die sich in dem ihrer Gruppe zugeordneten Liegebereich aufhalten, aus diesem Liegebereich gleichzeitig in den ersten oder gegebenenfalls weiteren Laufgang getrieben werden, und die erste oder gegebenenfalls die weitere erste Treib- und Absperrvorrichtung so ausgebildet ist, dass der für die jeweilige Gruppe zugeordnete Liegebereich für alle Kühe dieser Gruppe unzugänglich abgesperrt wird.

14. Verfahren nach einem der vorstehenden Ansprüche, **dadurch gekennzeichnet, dass** durch Betätigung einer zweiten und gegebenenfalls einer weiteren zweiten Treib- und Absperrvorrichtung zum Heraustreiben von Kühen aus ihrem Fressbereich in den ersten oder weiteren Laufgang zwischen Liege- und Fressbereich und zum Absperren des jeweiligen Fressbereichs, alle Kühe einer Gruppe, die sich in dem ihrer Gruppe zugeordneten Fressbereich aufhalten, aus diesem Fressbereich gleichzeitig in den ersten oder gegebenenfalls weiteren Laufgang getrieben werden.

15. Verfahren nach einem der vorstehenden Ansprüche, **dadurch gekennzeichnet, dass** zum Zusammentreiben einer Gruppe von Kühen in den zweiten Laufgang eine Viehtreibereinrichtung (80) oder eine weitere Viehtreibereinrichtung (180, 280, 380, 480) als Mistschieber ausgeführt ist und Verunreinigungen in dem ersten oder weiteren Laufgang geräumt werden können.

16. Verfahren nach einem der vorstehenden Ansprüche, **dadurch gekennzeichnet, dass** vor der Betätigung der ersten und/oder zweiten sowie gegebenenfalls der weiteren ersten und/oder weiteren zweiten Treib- und Absperrvorrichtung (70), der Viehtreibereinrichtung (80) sowie gegebenenfalls der weiteren Viehtreibereinrichtung (180, 280, 380, 480) und/oder vor dem Hineintreiben einer Gruppe von Kühen von dem zweiten Laufgang (40), gegebenenfalls über den Vorwartehof (50), in den Melkraum (60) ein akustisches Signal, vorzugsweise ein Klingel- oder Hornsignal, gegeben wird.

17. Verfahren nach einem der vorstehenden Ansprüche, **dadurch gekennzeichnet, dass** vor dem Treiben einer Gruppe von Kühen in den zweiten Laufgang eine Absperrung zwischen dem ersten Laufgang (30) und dem zweiten Laufgang (40) oder zwischen dem weiteren Laufgang (130, 230, 330, 430) und dem zweiten Laufgang (40) geöffnet wird.

18. Verfahren nach einem der vorstehenden Ansprüche, **dadurch gekennzeichnet, dass** nach oder während dem Treiben einer Gruppe von Kühen in den Vorwartehof (50), die Absperrung zwischen dem ersten Laufgang (30) und dem zweiten Laufgang (40) oder zwischen dem weiteren Laufgang (130, 230, 330, 430) und dem zweiten Laufgang (40) geschlossen wird.

19. Verfahren nach einem der vorstehenden Ansprüche, **dadurch gekennzeichnet, dass** die Kühe unter Erkennung jeder einzelnen Kuh gemolken werden, und die gemolkene Milch jeder einzelnen Kuh analysiert wird, vorzugsweise durch Messung der Leitfähigkeit der Milch.

20. Verfahren nach Anspruch 19, **gekennzeichnet durch** ein Vorbeitreiben der Grupppe von gemolkenen Kühen an einer Schleuse zur Erkennung der einzelnen Kühe und gegebenenfalls zur Absonderung einer Kuh aus der Gruppe.

21. Stall, umfassend eine Reinigungseinrichtung nach einem der Ansprüche 1 bis 6.

22. Stall nach Anspruch 21, umfassend:
- mindestens einen Liegebereich (10), der nebeneinander angeordnete Liegeboxen (12) für mindestens eine Gruppe von Kühen umfasst,
- einen Fressbereich (20) mit Fressplätzen (22) für die mindestens eine Gruppe von Kühen,
- einen ersten Laufgang (30) der zwischen dem Liege- und Fressbereich der ersten Gruppe angeordnet ist,
- gegebenenfalls eine erste Treib- und Absperrvorrichtung (70) zum Heraustreiben von Kühen aus ihrem Liegebereich (10) in den ersten Laufgang (30) und zum Absperren des Liegebereichs,
- gegebenenfalls eine zweite Treib- und Absperrvorrichtung zum Heraustreiben von Kühen aus ihrem Fressbereich (20) in den ersten Laufgang (30) und zum Absperren des Fressbereichs (20).

23. Stall nach einem der vorstehenden Ansprüche, **gekennzeichnet durch** eine Steuereinrichtung zur Steuerung eines der Verfahren nach einem der Ansprüche 7 bis 20.

24. Stall nach einem der vorstehenden Ansprüche, **gekennzeichnet durch**
- einen zweiten Laufgang (40), in den der erste Laufgang (30) mündet,
- eine Viehtreibereinrichtung (80) zum Treiben der auf den ersten Laufgang (30) zusammengetriebenen ersten Gruppe von Kühen von einem ersten Ende (31) des ersten Laufgangs zu einem zweiten Ende (32) des ersten Laufgangs (30) und in den zweiten Laufgang hinein;
- gegebenenfalls einen Vorwartehof (50);
- einen Melkraum (60),
- gegebenenfalls eine Schleuse zur Erkennung einzelner Kühe und gegebenenfalls zur Absonderung einer Kuh aus einer Gruppe.
Die Beschreibung und Ansprüche der Voranmeldungen DE 10 2004 016 720 und DE 10 2004 016 721 werden hiermit in ihrer Gesamtheit in die vorliegende Patentanmeldung eingefügt.
